# EUROPEAN PATENT APPLICATION

(11) **EP 3 319 078 A1**
(43) Date of publication of application: **09.05.2018**
(21) Application number: 16817889.5
(22) Date of filing: 28.06.2016
(51) Int. Cl.: G09G 3/36, G02F 1/133, G09G 3/20, G09G 3/34

(54) **DISPLAY DEVICE AND TELEVISION RECEIVING DEVICE**

(30) Priority: 30.06.2015 JP 2015131169
(71) Applicant: Sharp Kabushiki Kaisha, Sakai City, Osaka 590-8522 (JP)
(72) Inventor: SHIMIZU Takaharu, Sakai City, Osaka 590-8522 (JP)
(74) Representative: Müller Hoffmann & Partner
(86) International application number: PCT/JP2016/069075
(87) International publication number: WO 2017/002781

(57) **Abstract**

A liquid crystal display device 10 includes a liquid crystal panel 11, a backlight unit 12, and a control circuit board CTR. The liquid crystal panel 11 includes pixel portions PXR, PXG, and PXB. The backlight unit 12 is configured such that an amount of emitting light rays in a first color included in light rays in different colors is larger when an amount of emitting light rays in each color required to obtain reference white light for illumination light is defined as a reference amount. The control circuit board CTR is configured to perform control such that a gray level of red pixel portions PXR configured to exhibit a red color among the pixel portions PXR, PXG, and PXB is lower than gray levels of the pixel portions PXG and PXB configured to exhibit other colors during white display, the gray levels of the pixel portions PXG and PXB configured to exhibit other colors during red display are lower than the gray levels thereof during the white display, and the gray level of the red pixel portions PXR during the red display is higher than the gray level thereof during the white display.

## Description

### TECHNICAL FIELD

The present invention relates to a display device and a television device.

### BACKGROUND ART

A liquid crystal display disclosed in Patent Document 1 has been known as an example of conventional liquid crystal display devices. The liquid crystal display device disclosed in Patent Document 1 includes a light source unit configured to illuminate a liquid crystal panel with light produced by a combination of CCFL tubes and R color LEDs. B phosphors and G phosphors are applied to the CCFL tubes but not R phosphors. The R color LEDs are configured to emit light rays having a peak PR3 of a single spectrum in a range from 620 nm to 650 nm. According to the light source unit, an effect of sub spectrum of 595 nm by R phosphors, which is a problem for conventional CCFL tubes, can be canceled and color gamut can be expanded. With the G phosphors that emit light rays having a peak of a single spectrum in a range from 510 nm to 520 nm, an adverse effect resulting from a sub spectrum of 580 nm by conventional G phosphors can be reduced and color gamut can be expanded.

### RELATED ART DOCUMENT

### Patent Document

Patent Document 1: Unexamined Japanese Patent Application Publication No. 2007-52398

### Problem to be Solved by the Invention

In recent years, an expansion of a color reproduction range is required at a higher level in addition to high definition for a liquid crystal display device for a 4K or a 8K television set. To satisfy such a requirement, a thickness of color filters may be increased. However, color filters with a larger thickness may absorb a larger amount of light. Therefore, light use efficiency may decrease.

### DISCLOSURE OF THE PRESENT INVENTION

The present invention was made in view of the above circumstances. An object is to improve color reproducibility while light use efficiency is maintained at a higher level.

### Means for Solving the Problem

A display device according to the present invention includes a display panel, a lighting device, and a pixel controller. The display panel includes pixel portions configured to exhibit different colors. The lighting device is for applying illumination light that includes light rays in different colors exhibiting different colors to the display panel. The lighting device is configured such that an amount of emitting light rays in first color included in the light rays in different colors is larger when an amount of emitting light rays in each color required to obtain reference white light for the illumination light. The pixel controller is configured to perform control such that a gray level of first pixel portions configured to exhibit the first color among the pixel portions is lower than a gray level of the pixel portions configured to exhibit another color during white display and such that during first color display, the gray level of the pixel portions configured to exhibit the other color is lower than the gray level thereof during the white display and the gray level of the first pixel portions is higher than the gray level thereof during the white display.

According to the configuration, the light rays of the illumination light emitted by the lighting device are passed through the pixel portions included in the display panel according to the gray levels of the pixel portions. The pixel portions exhibit different colors and thus a predefined image is displayed. The illumination light from the lighting device is tinted with the first color in comparison to the reference white light. In the display panel, the gray level of the first pixel portions configured to exhibit the first color is adjusted below the gray level of the pixels configured to exhibit the other color by the pixel controller for the white display. Through the control, the white display is performed. In the display panel, for the first color display, the gray level of the pixel portions configured to exhibit the other color is adjusted lower than the gray level thereof during the white display and the gray level of the first pixel portions is adjusted above the gray level thereof during the white display by the pixel controller. According to the configuration, brightness regarding the first color becomes higher during the first color display and a color reproduction range expands.

The following configurations may be preferable for embodiments according to the present invention.
(1) The display panel may be configured such that the plurality of pixel portions may include at least red pixel portions configured to exhibit a red color, green pixel portions configured to exhibit a green color, and blue pixel portions configured to exhibit a blue color. The light rays in different colors applied by the lighting device may include at least red light rays, green light rays, and blue light rays. The light rays in first color may be the red light rays. The pixel controller may be configured to perform the control with the red pixel portions as the first pixel portions. According to the configuration, brightness regarding the red color becomes higher during the first color display and a color reproduction range expands. The expansion of the color reproduction range of the red color tends to be more recognizable by human in comparison to other colors. Therefore, this configuration is more preferable for improving display quality of images.
(2) The lighting device may be configured such that the amount of the emitting light rays in the first color may be 107% or higher when the amount of the emitting light rays in each color required to obtain the reference white light for the illumination light is defined as 100%. According to the configuration, when the brightness based on the amount of the emitting light rays in the first color required to obtain the reference white light for the illumination light is defined as 100%, the brightness regarding the first color during the first color display is higher than 105%, that is, an effect of improving the brightness at such a level can be achieved.
(3) The display panel may be configured such that the pixel portions may exhibit four or more different colors. According to the configuration, in comparison to the configuration including the pixel portions that exhibit three different colors, an area rate of each pixel portion is reduced. Therefore, an increase rate of the brightness regarding the first color during the first color display becomes higher as the amount of the emitting light rays in the first color included in the illumination light from the lighting device increases.
(4) The lighting device may be configured such that the amount of the emitting light rays in the first color is in a range from 125% to 220% when the amount of the emitting light rays in each color required to obtain the reference white light for the illumination light is defined as 100%. If the amount of the emitting light rays in the first color is lower than 125%, an effect of improving the brightness during the first color display may be similar to the effect exerted by the configuration including the three different colors of the pixel portions. If the amount of the emitting light rays in the first color is larger than 220%, the brightness efficiency during the white display may significantly decrease. With the amount of the emitting light rays in the first color in the range from 125% to 220%, the effect of improving the brightness during the first color display is higher in comparison to the configuration including three different colors of the pixel portions and the significant decrease in the brightness efficiency during the white display is less likely to occur.
(5) The display panel may be configured such that the pixel portions include at least red pixel portions configured to exhibit a red color, green pixel portions configured to exhibit a green color, blue pixel portions configured to exhibit a blue color, and yellow pixel portions configured to exhibit a yellow color. The light rays in different colors applied by the lighting device may include at least red light rays, green light rays, and blue light rays. The light rays in the first color are the red light rays. The pixel controller may be configured to perform the control with the red pixel portions as the first pixel portions. In the display panel having such a configuration, the yellow pixel portions included in the pixel portions pass yellow light rays, that is, the green light rays and the red light rays. The illumination light from the lighting device is tinted with the red color, which is the first color, in comparison to the reference white light. In comparison to the case in which the reference white light is used, a chromaticity regarding the yellow color during yellow display is shifted toward the red side. This configuration is preferable for expanding the color reproduction range.
(6) The lighting device may include light emitting components configured to emit light rays and phosphors for converting wavelengths of light from the light emitting components. The phosphors may include at least first phosphors configured to emit light rays in the first color. The lighting device may be configured such that a content of the first phosphors is higher when a content of the phosphors required to obtain the reference white light for the illumination light is defined as a reference content. According to the configuration, the wavelengths of some of the light rays emitted by the light emitting components are converted by the phosphors and thus the illumination light of the lighting device can be achieved. The content of the first phosphors included in the phosphors may be higher than the reference content regarding the content of the phosphors required to obtain the reference white light for the illumination light. Therefore, the amount of the emitting light rays in the first color emitted by the first phosphors is larger than the reference amount of emitting light rays in each color required to obtain the reference white light for the illumination light. Without complicated adjustment on the amount of the emitting light rays of the emitting light components, target illumination light can be easily obtained.
(7) The lighting device may include at least light sources, cases, and sealants. The light sources may include the light emitting components. The cases may hold the light emitting components, respectively. The sealants may seal the light emitting components in the cases, respectively. The sealants may contain the phosphors. According to the configuration, at least some of the light rays emitted by the light emitting components are used by the phosphors contained in the sealants that seal the light emitting components in the respective cases as excitation light rays.
(8) The light sources may be configured such that the first phosphors are potassium silicofluoride using manganese for an activator. Because the full width at half maximum of the main peak in the emission spectrum of the potassium silicofluoride that are the first phosphors is sufficiently small, the red light rays with high purity can be emitted. The potassium silicofluoride does not include the rare earth element, which is an expensive material. Therefore, the production cost of the light sources can be reduced. The potassium silicofluoride is less likely to cause performance degradation due to moisture and thus suitable for substances to be contained in the sealants for sealing the light emitting components in the cases.
(9) The lighting device may include at least light sources and a wavelength conversion member. The light sources may include the light emitting components. The wavelength conversion member may contain the phosphors. The wavelength conversion member may be disposed on an exit side of a light emitting path relative to the light sources. The wavelength conversion member may be configured to convert wavelengths of light rays from the light sources. Because the phosphors are contained in the wavelength conversion member disposed on the exit side of the light emitting path relative to the light sources, performance of the phosphors is less likely to be degraded due to heat produced by the light emitting components in the light sources. Furthermore, it is easier to find a means of sealing the phosphors with high sealing properties for mixing the phosphors into the wavelength conversion member. This configuration is preferable when phosphors that have an issue of degradation in performance due to moisture are used.
(10) The phosphors may be quantum dot phosphors. With the quantum dot phosphors, efficiency in light wavelength conversion by the wavelength conversion member increases and the color purity of the light rays obtained through the wavelength conversion increases. Furthermore, with a means of sealing the quantum dot phosphors in the wavelength conversion member with high sealing properties, the performance of the quantum dot phosphors is less likely to be degraded due to the moisture.
(11) The lighting device may include at least light emitting components configured to emit light rays in different colors. The lighting device may be configured such that an amount of emitting light rays emitted by the first light emitting components configured to emit light rays in the first color may be larger when an amount of the emitting light rays in each color emitted by the light emitting components required to obtain the reference white light for the illumination light is defined as a reference amount. According to the configuration, the illumination light from the lighting device is formed from the light rays in different colors emitted by the light emitting components. The amount of emitting light rays regarding the first light emitting components included in the light emitting components is larger than the reference amount of emitting light rays in each color regarding the light emitting components required to obtain the reference white light for the illumination light. In comparison a lighting device having a configuration in which each of light sources includes a single light emitting component and phosphors for converting a wavelength of the light emitting component, the color purity of the light rays in each color emitted by the light emitting components is higher. This configuration is preferable for improving the color reproducibility.

To solve the problem described earlier, a television device according to the present invention includes the display device described above. According to the television device having such a configuration, the brightness regarding the first color during the first color display is higher and the color reproduction range is wider. Therefore, the television device can display television images with high display quality.

### Advantageous Effect of the Invention

According to the present invention, the color reproducibility can be improved while the light use efficiency is maintained at a high level.

### BRIEF DESCRIPTION OF THE DRAWINGS

FIG. 1 is an exploded perspective view illustrating a general configuration of a television device according to a first embodiment of the present invention.
FIG. 2 is an exploded perspective view illustrating a general configuration of a liquid crystal display device included in the television device.
FIG. 3 is a cross-sectional view illustrating a cross-sectional configuration of a liquid crystal panel included in the liquid crystal display device along a long dimension thereof.
FIG. 4 is a magnified plan view illustrating a two-dimensional configuration of an array substrate included in the liquid crystal panel in a display area.
FIG. 5 is a magnified plan view illustrating a two-dimensional configuration of a CF substrate included in the liquid crystal panel in a display area.
FIG. 6 is a plan view of a backlight unit included in the liquid crystal display device.
FIG. 7 is a cross-sectional view illustrating a cross-sectional configuration of the liquid crystal display device along a long dimension thereof.
FIG. 8 is a cross-sectional view illustrating a cross-sectional configuration of the liquid crystal display device along a short dimension thereof.
FIG. 9 is a cross-sectional view illustrating a cross-sectional configuration of an end of the liquid crystal display device along the long dimension.
FIG. 10 is a cross-sectional view of an LED and an LED board.
FIG. 11 is a block diagram illustrating a configuration related to driving of the liquid crystal panel.
FIG. 12 is a graph illustrating emission spectra of the LED.
FIG. 13 is a table illustrating tone values of pixels in different colors during the pixels are in display mode.
FIG. 14 is a graph illustrating transmission spectra of the liquid crystal panel during red display.
FIG. 15 is a table illustrating relative contents of red phosphors, relative brightness levels during white display, relative brightness levels during red display, and chromaticity values during red display in comparative experiment 1.
FIG. 16 is a graph illustrating relationships between the brightness levels for the white display and the relative brightness levels for the red display relative to the relative contents of the red phosphors in comparative experiment 1.
FIG. 17 is a CIE 1931 color space diagram illustrating shifting in degree of redness according to a variation in relative content of the red phosphors for the red display.
FIG. 18 is a table illustrating chromaticity values in different colors when the relative content of the red phosphors is defined as 100% and the relative content of the red phosphors is defined as 180%.
FIG. 19 is a CIE 1976 color space diagram illustrating chromaticity ranges when the relative content of the red phosphors is defined as 100% and the relative content of the red phosphors is defined as 180% in comparative experiment 1.
FIG. 20 is a CIE 1931 color space diagram illustrating a spectral locus, a line of purples, and MacAdam ellipses.
FIG. 21 is an exploded perspective view illustrating a schematic configuration of a television device according to a second embodiment of the present invention.
FIG. 22 is a cross-sectional view illustrating a cross-sectional configuration of a liquid crystal panel along a long dimension thereof.
FIG. 23 is a magnified plan view illustrating a two-dimensional configuration of an array substrate in a display area.
FIG. 24 is a magnified plan view illustrating a two-dimensional configuration of a CF substrate in the display area.
FIG. 25 is a table illustrating relative contents of red phosphors, relative brightness levels during white display, relative brightness levels during red display, and chromaticity values during red display in comparative experiment 2.
FIG. 26 is a graph illustrating relationships between the brightness levels for the white display and the relative brightness levels during the red display relative to the relative contents of the red phosphors in comparative experiment 2.
FIG. 27 is a CIE 1931 color space diagram illustrating shifting in degree of redness according to a variation in relative content of the red phosphors during the red display in comparative experiment 2.
FIG. 28 is a table illustrating chromaticity values in different colors when the relative content of the red phosphors is defined as 100% and when the relative content of the red phosphors is defined as 180% in comparative experiment 2.
FIG. 29 is a CIE 1976 color space diagram illustrating chromaticity ranges when the relative content of the red phosphors is defined as 100% and the relative content of the red phosphors is defined as 180% in comparative experiment 2.
FIG. 30 is a cross-sectional view illustrating a cross-sectional configuration of the liquid crystal display device along a long dimension thereof.
FIG. 31 is a cross-sectional view of an LED and an LED board.
FIG. 32 is an exploded perspective view illustrating a general configuration of a liquid crystal display device according to a fourth embodiment of the present invention.
FIG. 33 is a cross-sectional view illustrating a cross-sectional configuration of a liquid crystal display device along a short dimension thereof.
FIG. 34 is a cross-sectional view illustrating a cross-sectional configuration of a liquid crystal display device according to a fifth embodiment of the present invention along a short dimension thereof.
FIG. 35 is a cross-sectional view illustrating a cross-sectional configuration of a liquid crystal display device according to a sixth embodiment of the present invention along a short dimension thereof.
FIG. 36 is a cross-sectional view of LEDs and an LED board according to a seventh embodiment of the present invention.

### MODE FOR CARRYING OUT THE INVENTION

### <First Embodiment>

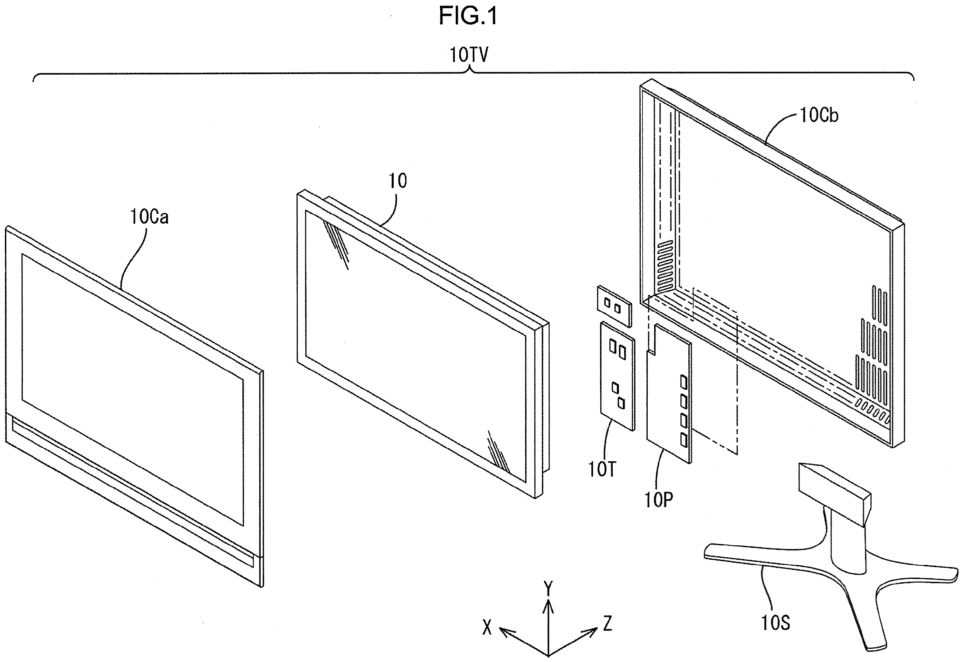

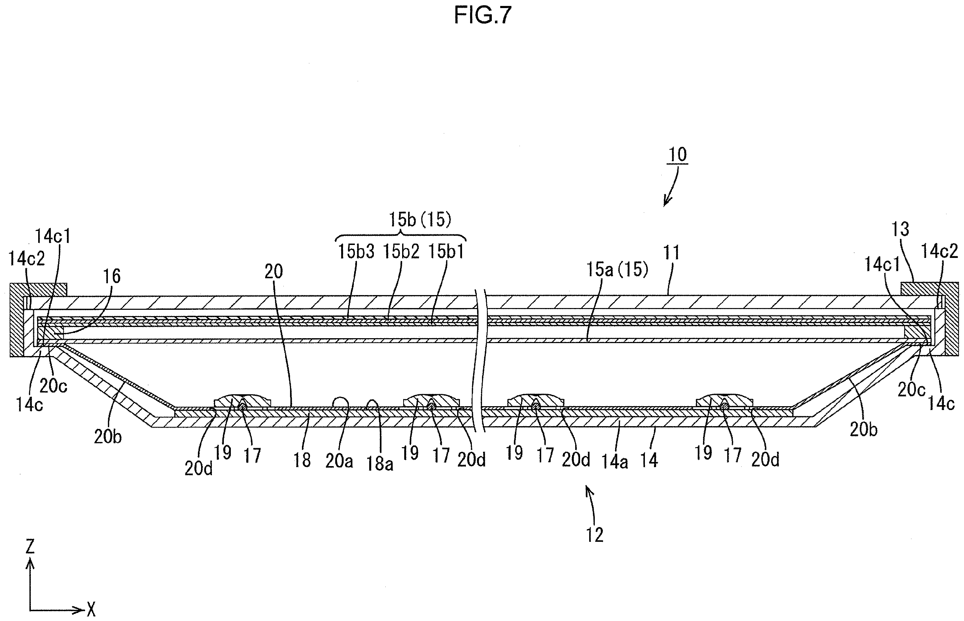

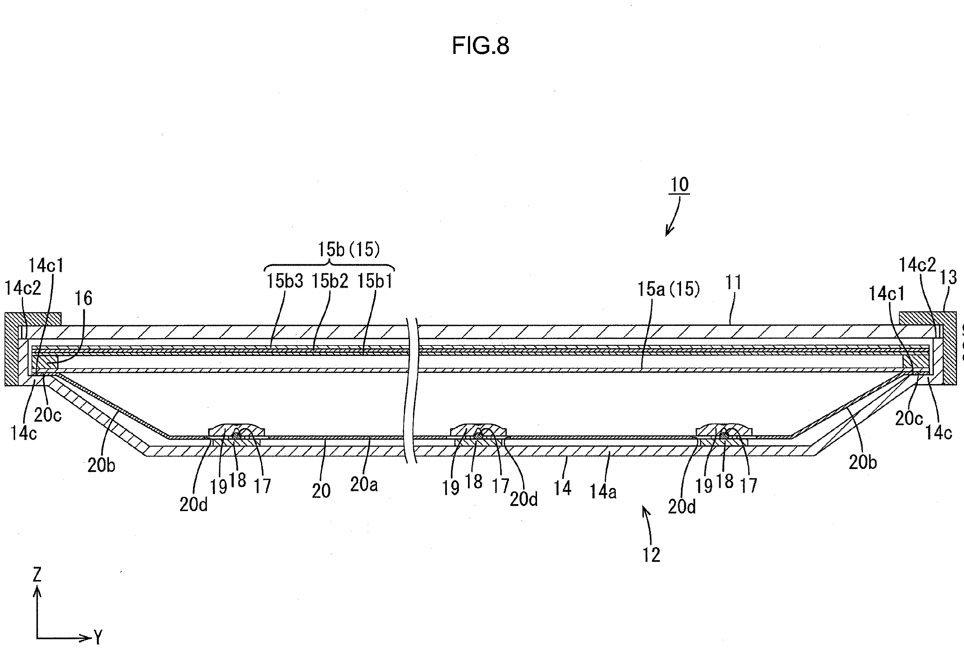

A first embodiment of the present invention will be described with reference to FIGS. 1 to 20. In this section, a television device 10TV, a liquid crystal display device 10 included in the television device 10TV, and a backlight unit 12 included in the liquid crystal display device 10 will be described. XX-axes, Y-axes, and Z-axes may be present in drawings. The axes in each drawing correspond to the respective axes in other drawings to indicate the respective directions. Upper sides and lower sides in in FIGS. 7 and 8 correspond to a front side and a rear side of the television device 10TV, respectively.

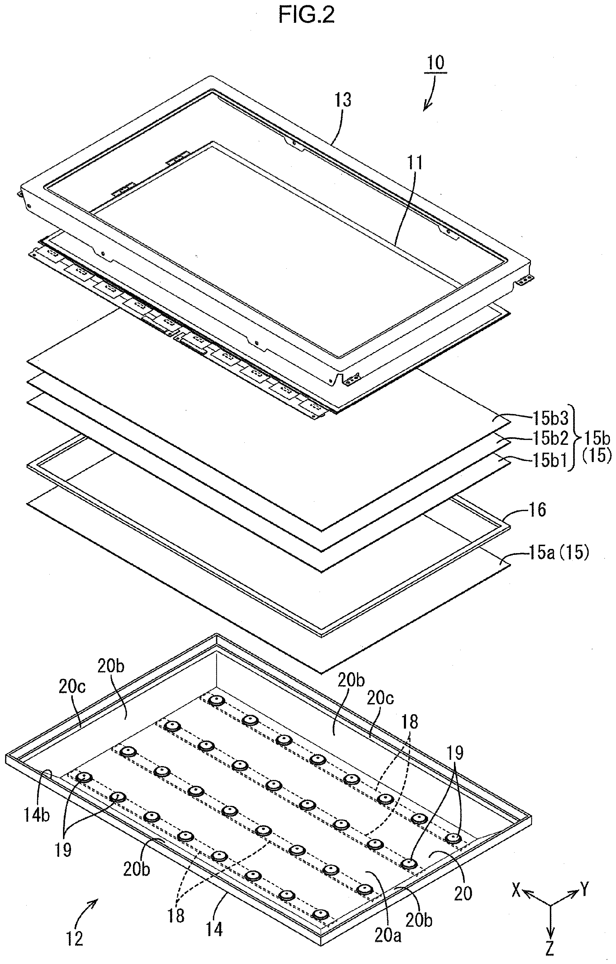

As illustrated in FIG. 1, the television device 10TV according to this embodiment includes the liquid crystal display device 10, a front cabinet 10Ca, a rear cabinet 10Cb, a power supply 10P, a tuner 10T (a receiver), and a stand 10S. The front cabinet 10Ca and the rear cabinet 10Cb sandwich the liquid crystal display device 10 to hold the liquid crystal display device 10. The tuner 10T is configured to receive TV signals. The liquid crystal display device 10 (the display device) has a horizontally-long rectangular (an elongated) overall shape and. The liquid crystal display device 10 is held in a vertical position. As illustrated in FIG. 2, the liquid crystal display device 10 includes a liquid crystal panel 11 and the backlight unit 12 (the lighting device). The liquid crystal panel 11 is a display panel configured to display images. The backlight unit 12 is an external light source configured to supply light for image display to the liquid crystal panel 11. A bezel 13 having a frame shape collectively holds the liquid crystal panel 11 and the lighting unit 12.

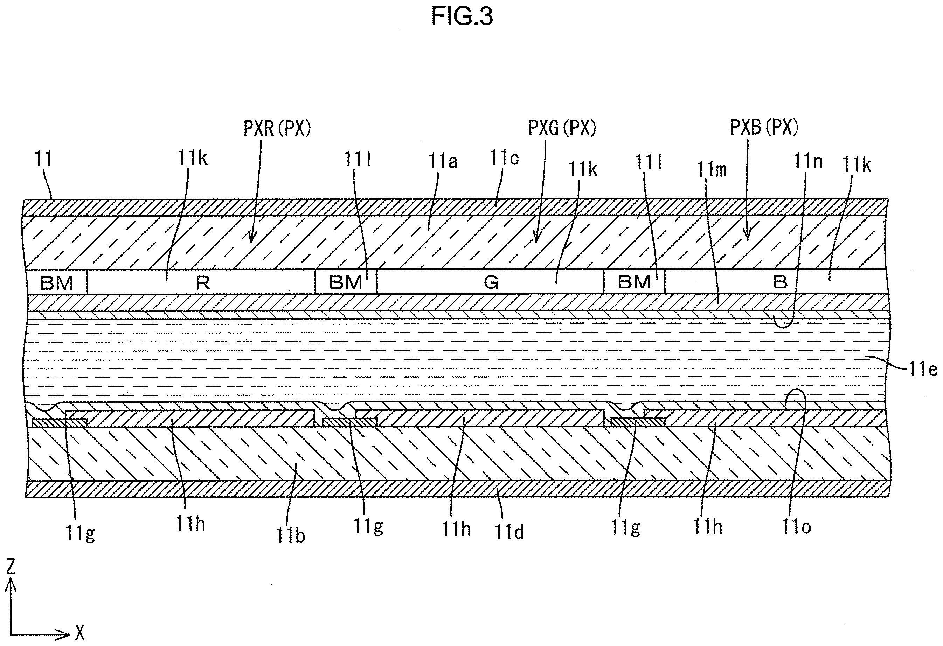

First, the liquid crystal panel 11 will be described. As illustrated in FIG. 1, the liquid crystal panel 11 has a round overall shape in a plan view. As illustrated in FIG. 3, the liquid crystal panel 11 includes at least a pair of substantially transparent glass substrates 11a and 11b having high light transmissivity and a liquid crystal layer 11e between the substrates 11a and 11b, and a sealant (not illustrated). The liquid crystal layer 11e includes liquid crystal molecules that are substances with optical characteristics that vary according to application of an electric field (a liquid crystal material). The sealant is applied around the liquid crystal layer 11e to extend in a circumferential direction of the liquid crystal layer 11e and to bind the substrates 11a and 11b with a gap corresponding to a thickness of the liquid crystal layer 11e maintained therebetween. In the liquid crystal panel 11, the liquid crystal layer 11e is sandwiched between the substrates 11a and 11b by a dropping injection method. The liquid crystal panel 11 includes a display area (an active area) in which images are displayed and a non-display area (a non-active area) in which images are not displayed. The display area is a center area of a screen and the non-display area is a frame-shaped area that surrounds the display area AA. The liquid crystal panel 11 is configured to display images in the display area using light supplied by the backlight unit 12. The front side of the liquid crystal panel 11 is a light exiting side. Polarizing plates 11c and 11d are bonded to outer surfaces of the substrates 11a and 11b.

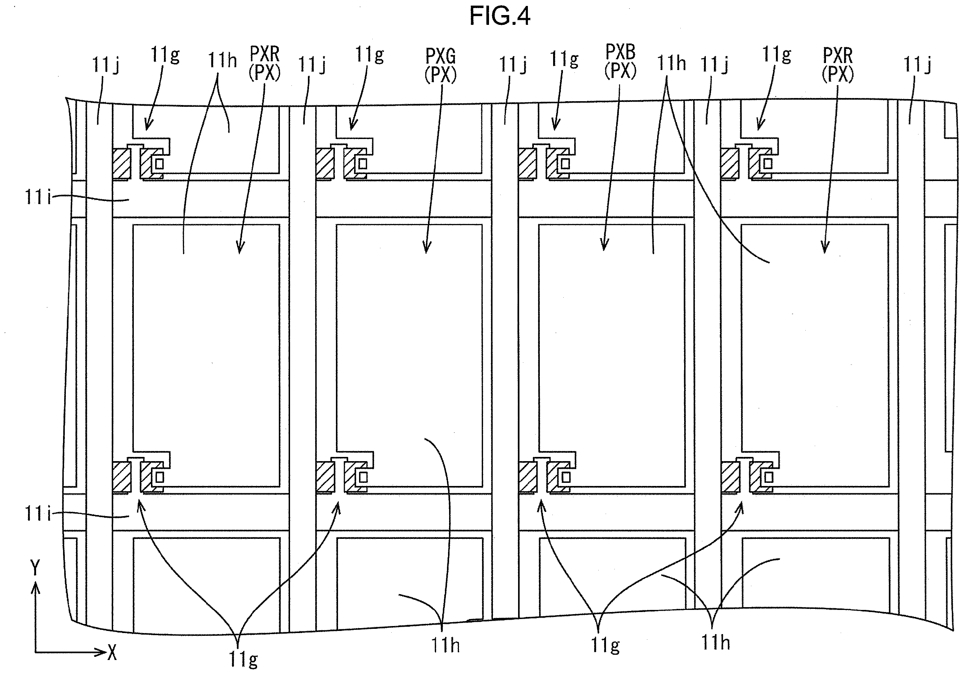

One of the substrates 11a and 11b in the liquid crystal panel 11 on the front side is a CF substrate 11a and one on the rear side (the back side) is an array substrate 11b. On an inner surface of the array substrate 11b (on the liquid crystal layer 11e side, an opposed surface opposed to the CF substrate 11a), as illustrated in FIGS. 3 and 4, thin film transistors (TFTs, display components) 11g which are switching components and pixel electrodes 11h are arranged in a matrix. Gate lines 11i (scan lines) and source lines 11j (data lines) routed in a grid to surround the TFTs 11g and the pixel electrodes 11h. The gate lines 11i and the source lines 11j are connected to gate electrodes and source electrodes, respectively. The pixel electrodes 11h are connected to drain electrodes of the TFTs 11g. The TFTs 11g are driven based on signals supplied to the gate lines and the source lines. Voltages are applied to the pixel electrodes 11h in accordance with the driving of the TFTs 11g. The pixel electrodes 11h are disposed in quadrilateral areas defined by the gate lines and the source lines. The pixel electrodes 11h are transparent electrodes made of indium tin oxide (ITO) or zinc oxide (ZnO).

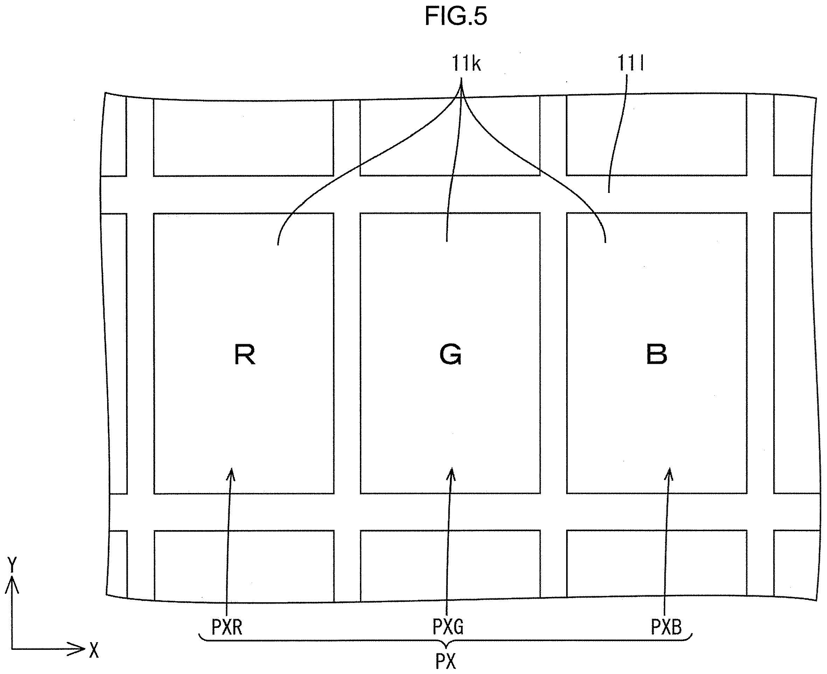

As illustrated in FIGS. 3 and 5, on the inner surface of the CF substrate in the display area AA, color filters 11k are arranged at positions opposed to the pixel electrodes 11h on the array substrate 11b to form a matrix. The color filters 11k include red, green, and blue (R, G, B) color sections that exhibit three colors. The color sections are repeatedly arranged in predefined sequence. Each color of the color filters 11k selectively pass light rays in a specific wavelength range regarding the corresponding color. Namely, the red color filters 11k pass the light rays in the red wavelength range, the blue color filters 11k pass the light rays in the blue wavelength range, and the green color filters 11k pass the light rays in the green wavelength range. A light blocking layer 111 (a black matrix) for reducing color mixture is formed in a grid among the color filters 11k. The light blocking layer 111 overlaps the gate lines 11i and the source lines 11j in a plan view. A counter electrode 11m is formed in a solid pattern on surfaces of the color filters 11k and the light blocking layer 111 opposed to the pixel electrodes 11h on the array substrate 11b. Alignment films 11n and 11o for orientating the liquid crystals molecules in the liquid crystal layer 11e are formed on outer surfaces of the inner surfaces of the substrates 11a and 11b, respectively.

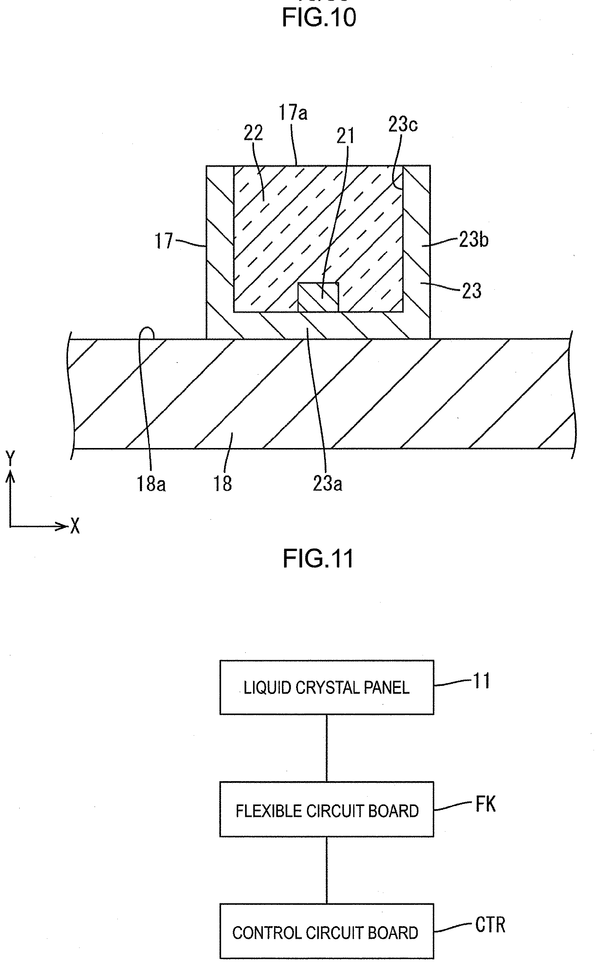

In the liquid crystal panel 11, color filters 11k in three colors that are red, green, and blue and three pixel electrodes opposed to the color filters 11k form one group that is a display pixel PX. The display pixel PX is a display unit. The display pixel PX includes a red pixel portion PXR, a green pixel portion PXG, and a blue pixel portion PXB. The red pixel portion PXR includes the red color filter 11k and the pixel electrode 11h opposed to the red color filter 11k. The green pixel portion PXG includes the green color filter 11k and he pixel electrode 11h opposed to the green color filter 11k. The blue pixel portion PXB includes the blue color filter 11k and the pixel electrode 11h opposed to the blue color filter 11k. Pixel sections PXR, PXG, and PXB are repeatedly arranged on a plate surface of the liquid crystal panel 11 along a row direction (the X-axis direction) to form lines of pixels. The lines of pixels are arranged in a column direction (the Y-axis direction). Voltages are applied to the pixel electrodes 11h in the pixel portions PXR, PXG, and PXB by the TFTs 11g connected to the pixel electrodes 11h, respectively. Orientation status of the liquid crystal layer 11e in the pixel portions PXR, PXG, and PEB vary based on the voltages. Amounts of transmitting light rays through the pixel portions PXR, PXG, and PXB in the liquid crystal panel 11 are individually adjusted. As illustrated in FIG. 11, voltages are applied to the TFTs 11g by a control circuit board CTR (a pixel controller) which is a signal source via a flexible circuit board FK connected to an end of the array substrate 11b. The control circuit board CTR supplies various kinds of signals including voltage signals based on tone values of the pixel portion PXR, PXG, and PXB (pixel values) defined based on an image to be displayed in the display area of the liquid crystal panel 11 to the gate lines 11i and the source lines 11j connected to the TFTs 11g. As a result, the TFTs 11g are driven. The control circuit board CTR in this embodiment controls each of the pixel portion PXR, PXG, and PXB with a 256-level gray scale that includes levels from 0 to 255. Each display pixel PX including the pixel portion PXR, PXG, and PXB produces 16,770,000 display colors.

Next, the backlight unit 12 will be described in detail. As illustrated in FIG. 2, the backlight unit 12 includes a chassis 14, optical members 15, and a frame 16. The chassis 14 has a substantially box shape with a light exiting portion 14b (a light exiting section, an opening) which includes an opening on the front side (a light exiting side, a liquid crystal panel 11 side). The optical members 15 are disposed to cover the light exiting portion 14b of the chassis 14. The frame 16 is disposed between edge portions of the optical members 15. In the chassis 14, LEDs 17 (light sources), LED boards 18, diffuser lenses 19, and a reflection sheet 20 (a reflection member) 20 are disposed. The LEDs 17 are mounted on the LED boards 18. The diffuser lenses 19 are mounted at positions corresponding to the LEDs 17. The reflection sheet 20 is configured to reflect light rays inside the chassis 14. In the backlight unit 12 in this embodiment, the LEDs 17 are disposed below the liquid crystal panel 11 and the optical members 15 such that light emitting surfaces 17a are opposed to the liquid crystal panel 11 and the optical members 15, that is, the backlight unit 12 is a so-called direct backlight. The components of the backlight unit 12 will be described in detail.

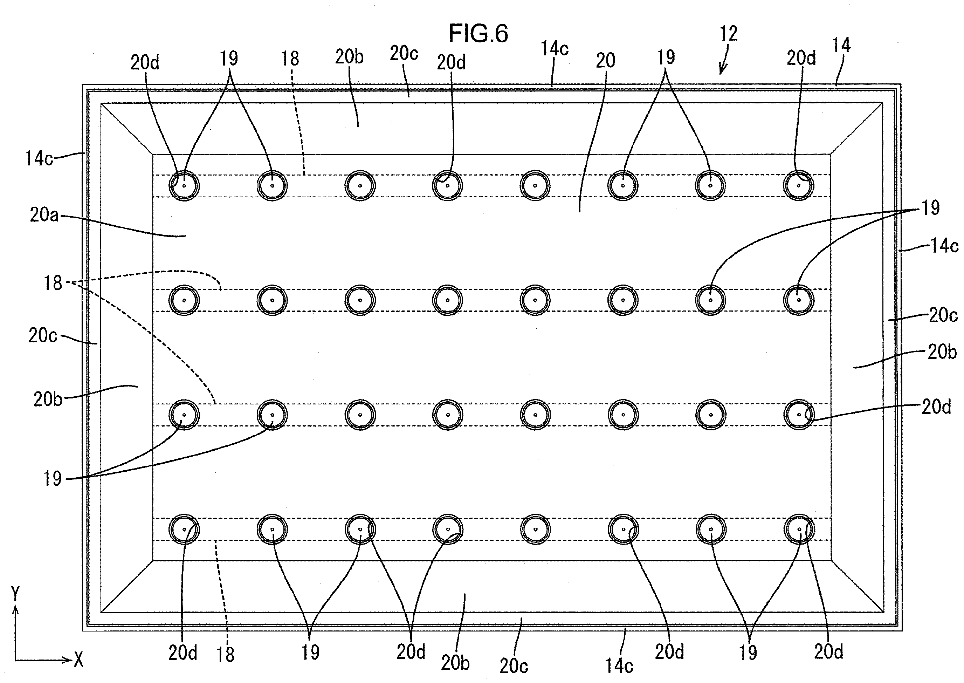

The chassis 14 is made of a synthetic resin material. As illustrated in FIGS. 6 to 8, the chassis 14 includes a bottom portion 14a and side portions 14c. The bottom portion 14a has a horizontally-long rectangular shape similar to the shape of the liquid crystal panel 11. The side portions 14c project from outer edges of the bottom portion 14a to the front side (the light exiting side), respectively. An overall shape of the chassis 14 is a shallow box shape (a tray shape). The long edges and the short edges of the chassis 14 are along the X-axis direction and the Y-axis direction, respectively. The bottom portion 14a of the chassis 14 is disposed behind the LED boards 18, that is, on an opposite side from a light emitting surface 17a side (the light exiting side). The side portions 14c of the chassis 14 form a frame shape with a small height as a whole. A size of the opening of the chassis 14 gradually increases toward the front end (on the light exiting portion 14b side, an opposite side from the bottom portion 14a). The side portions 14c include first steps 14c1 on a lower side and second steps 14c2 on an upper side. Edge portions of the optical members 15 (specifically, a diffuser plate 15a) and the reflection sheet 20, which will be described later, are placed on the first steps 14c1. Edge portions of the liquid crystal panel 11 are placed on the second steps 14c2. The frame 16 and the bezel 13 are fixed to the side portions 14c.

As illustrated in FIG. 2, the optical members 15 have a horizontally-long rectangular shape similar to the shapes of the liquid crystal panel 11 and the chassis 14 in the plan view. The optical members 15 are disposed to cover the light exiting portion 14b of the chassis 14 on an exit side a light exiting path relative to the LEDs 17. The optical members 15 include the diffuser plate 15a disposed on the rear side (closer to the LEDs 17, an opposite side from the light exiting side) and multiple optical sheets 15b disposed on the front side (closer to the liquid crystal panel 11, the light exiting side). As illustrated in FIGS. 7 and 8, the edge portions of the diffuser plate 15a are placed on the first steps 14c1 of the side portions 14c to cover the light exiting portion 14b of the chassis 14. The diffuser plate 15a is disposed between the optical sheet 15b and the LEDs 17 and the diffuser lenses 19. The diffuser plate 15a is disposed on the front side relative to the LEDs 17 and the diffuser lenses 19, that is, on the light exiting side to be opposed to the LEDs 17 and the diffuser lenses 19 with a predefined gap. The diffuser plate 15a includes a substantially transparent resin base having a predefined thickness and diffuser particles dispersed in the base. The diffuser plate 15a has a function for diffusing light rays passing therethrough.

As illustrated in FIGS. 7 and 8, the edge portions of the optical sheets 15b are placed on the frame 16 to cover the light exiting portion 14b of the chassis 14. The optical sheets 15b are disposed between the liquid crystal panel 11 and the diffuser plate 15a. The optical sheets 15b have a thickness smaller than the thickness of the diffuser plate 15a and include three sheets. Specifically, the optical sheets 15b include a micro lens sheet 15b1, a prism sheet 15b2, and a reflective type polarizing sheet 15b3. The micro lens sheet 15b1 is configured to exert isotropic light collection effects on the light rays emitted by the LEDs 17. The prism sheet 15b2 is configured to exert anisotropic light collection effects on the light rays. The reflective type polarizing sheet 15b3 is configured to reflect and polarize the light rays to contribute to improvement of brightness. The micro lens sheet 15b1, the prism sheet 15b2, and the reflective type polarizing sheet 15b3 of the optical sheets 15b are layered in this sequence.

As illustrated in FIG. 2, the frame 16 has a frame shape along the edge portions of the liquid crystal panel 11 and the optical members 15. The frame 16 has a block shaped cross section. As illustrated in FIGS. 7 and 8, the frame 16 is placed on the edge portions of the diffuser plate 15a which are placed on the first steps 14c1 of the side portions 14c to press the edge portions of the diffuser plate 15a and the reflection sheet 20, which will be described later, from the front side. The outer edge portions of the diffuser plate 15a and the reflection sheet 20 are sandwiched between the frame 16 and the first steps 14c1. The edge portions of the optical sheets 15b are placed on the frame 16 and supported by the frame 16 from the rear side. According to the configuration, a predefined gap is maintained between the optical sheets 15b and the diffuser plate 15a. According to the frame 16 having such a configuration, a holding force applied to the optical sheets 15b in a thickness direction thereof is smaller than a holding force applied to the diffuser plate 15a in a thickness direction thereof. Therefore, variations in size of the optical sheets 15b due to thermal expansion and thermal contraction of the optical sheets 15b can be accommodated. Wrinkles are less likely to be produced due to the variations in size of the optical sheets 15b. Furthermore, the edge portions of the optical sheets 15b placed on the frame 16 overlap the frame 16 and the edge portions of the diffuser plate 15a in the plan view. In comparison to a configuration in which optical sheets are directly placed on the diffuser plate 15a that is pressed by the frame 16 from the front side, the edge portions of the diffuser plate 15a are located outer. This configuration is preferable for reducing a frame size.

Next, the LEDs 17 and the LED boards 18 on which the LEDs 17 are mounted will be described. As illustrated in FIGS. 7 and 8, the LEDs 17 are surface-mounted on the LED boards 18 with the light emitting surfaces 17a facing the opposite side from the LED board 18 side. Namely, the LEDs 17 are top surface emitting type LEDs. The light emitting surfaces 17a of the LEDs 17 are opposed to a plate surface of the optical member 15 (the diffuser plate 15a). Specifically, as illustrated in FIG. 10, the LEDs 17 include blue LED components 21 (blue light emitting components, light emitting components), sealants 22, and cases 23 (containers, cases). The blue LED components are light sources. The sealants are for sealing the blue LED components 21. The cases 23 hold the blue LED components 21 and filled with the sealants 22.

The blue LED components 21 are semiconductor made of a semiconductor material such as InGaN. Each blue LED component 21 is configured to emit light rays in a single color of blue with a wavelength in a blue wavelength range (about 420 nm to 500 nm) when forward biased. The blue LED components 21 are connected to a wiring trace on the LED board 18 outside the cases 23 via a lead frame, which is not illustrated. In the production process of the LED 17, an internal space of each case 23 that holds the corresponding blue LED component 21 therein is filled with the sealant 22. Through the process, the blue LED component 21 and the lead frame are encapsulated and thus protected.

In the production process of the LED 17, the internal space of each case 23 that holds the corresponding blue LED component 21 therein is filled with the sealant 22. Through the process, the blue LED component 21 and the lead frame are encapsulated and thus protected. The sealants 22 are made of substantially transparent thermosetting resin material (e.g., epoxy resin material, silicone resin material). Each sealant 22 contains green phosphors and red phosphors, which are not illustrated, with predefined percentages and dispersed. The green phosphors emit light rays in a green wavelength range (about 500 nm to 570 nm), that is, green light rays when excited by the blue light rays emitted by the blue LED components 21. The red phosphors emit light rays in a red wavelength range (about 600 nm to 780 nm), that is, red light rays when excited by the blue light rays emitted by the blue LED components 21. Therefore, light emitted by each LED 17 (in illumination light from the backlight unit 12) includes three colors of light rays, that is, the blue light rays emitted by the blue LED component 21 (a blue light component), the green light rays emitted by the green phosphors (a green light component), and the red light rays emitted by the red phosphors (a red light component). The light exhibits a substantially white color. Namely, the LED 17 emits a substantially white light color. A combination of the green light rays emitted by the green phosphors and the red light rays emitted by the red phosphors produces yellow light. Therefore, it may say that the light emitted by the LED 17 includes a blue light component from an LED chip and a yellow light component. The blue LED components 21 and the emission spectra of the green phosphors and the red phosphors will be described in detail later.

The cases 23 are made of synthetic resin (e.g., polyamide based resin) or ceramic with a white surface having high light reflectivity. Each case 23 has a box-like overall shape with an opening 23c on the light exiting side (the light emitting surface 17a side, an opposite side from the LED board 18 side). The case 23 includes a bottom wall 23a and sidewalls 23b. The bottom wall 23a extends along mounting surfaces 18a of the LED boards 18. The sidewalls 23b project from outer edges of the bottom wall 23a. The bottom wall 23a has a rectangular shape when viewed from the front side (the light exiting side). The sidewalls 23b form a rectangular drum-like shape along the outer edges of the bottom wall 23a. The sidewalls 23b forms a rectangular frame shape when viewed from the front side. The blue LED component 21 is disposed on an inner surface (a bottom surface) of the bottom wall 23a of the case 23. The lead frame penetrates the sidewall 23b. An end of the lead frame inside the case 23 is connected to the blue LED component 21 and an end of the lead frame outside the case 23 is connected to the wiring trace on the LED board 18.

The green phosphors and the red phosphors included in the LEDs 17 in this embodiment will be described. The green phosphors contain at least sialon based phosphors, which is one kind of aluminum oxynitride phosphors. The sialon based phosphor is an oxynitride including an aluminum atom substituted for a part of a silicon atom of silicon nitride and an oxygen atom substituted for a part of nitrogen atom. The sialon base phosphor, which is an oxynitride, has higher emission efficiency and durability in comparison to other phosphors made of sulfide or oxide. The "higher durability" means that a decrease in brightness is less likely to occur over time even if the phosphor is subjected to excitation light with high energy from the LED chip. Furthermore, a full width at half maximum in the emission spectrum is sufficiently reduced and thus green light with high color purity is emitted. A rare earth element (e.g., Tb, Yg, and Ag) is used for the sialon based phosphor as an activator. The sialon based phosphor included in the green phosphors in this embodiment is β-SiAlON. The β-SiAlON is one kind of sialon based phosphors including a solid solution of aluminum and oxygen in a β type silicon nitride crystal. The β-SiAlON is expressed by a general formula of Si_{6-z}Al_{z}O_{z}N_{8-z} (z is an amount of the solid solution) or a general formula of (Si, Al)₆(O, N)₈. Europium (Eu), which is one kind of rare earth elements, is used for the activator in the β-SiAlON in this embodiment. Therefore, the full width at half maximum in the emission spectrum is further reduced and thus the green light with high color purity is emitted.

The red phosphors contain at least complex fluoride phosphors. The complex fluoride is expressed by a general formula of A₂MF₆ (M is one or more kinds of substances selected from Si, Ti, Zr, Hf, Ge, and Sn, A is one or more kinds of substances selected from Li, Na, K, Rb, and Cs). The complex fluoride phosphor has a full width at half maximum of the emission spectrum is sufficiently small and thus red light with high color purity is emitted. The complex fluoride phosphor is less likely to absorb the green light emitted by the green phosphor. Therefore, the green light use efficiency is maintained at a high level. The complex fluoride is potassium silicofluoride (K₂SiF₆:Mn) using manganese for an activator. Such a potassium silicofluoride does not include the rare earth element in the material thereof, which is expensive. Therefore, the production cost related to the red phosphors and the LEDs 17 is low.

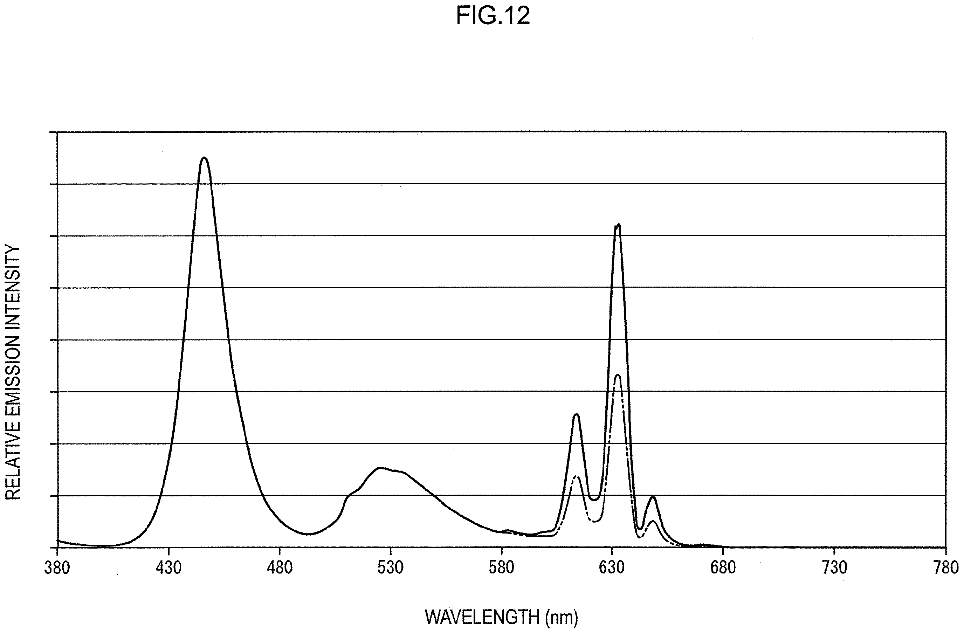

Next, the emission spectrum of the LEDs 17 will be described. Each LED 17 has the emission spectrum illustrated in FIG. 12. FIG. 12 illustrates the emission spectrum of the LED 17. The horizontal axis and the vertical axis represent wavelength (unit: nm) and relative emission intensity (no unit), respectively. The blue LED component 21 in the LED 17 has the emission spectrum with a main emission wavelength (a peak wavelength) in the wavelength range of blue light, for example, about 444 nm and the full width at half maximum of about 20 nm. The full width at half maximum of the emission spectrum of the blue light emitted by the blue LED component 21 is sufficiently small and thus color purity is high. Furthermore, the brightness is sufficiently high. Therefore, the green phosphors and the red phosphors are efficiently excited and emit the green light and the red light. Furthermore, the color purity of the blue light emitted by the LEDs 17 is high. The main emission wavelength of the β-SiAlON, which is the green phosphor, is in the wavelength range of green light, for example, about 533 nm. Furthermore, the β-SiAlON has the emission spectrum with the full width at half maximum of about 53 nm. The potassium silicofluoride, which is the red phosphor, has an emission spectrum with one main peak and two sub-peaks, one on a long wavelength side (a first sub-peak) and one on a short wavelength side (a second sub-peak). More specifically, the main emission wavelength of the main peak of the potassium silicofluoride, which is the red phosphor, is in the wavelength range of red light, for example, from 629 nm to 635 nm (preferably about 630 nm). The full width at half maximum of the main peak is smaller than 10 nm. The main emission wavelength of the first sub-peak is in a range from 607 nm to 614 nm (preferably about 613 nm). The main emission wavelength of the second sub-peak is in a range from 645 nm to 648 nm (preferably about 647 nm). The full width at half maximum of the main peak in the emission spectrum of the red phosphor is smaller than the full width at half maximum of the main peak in the emission spectrum of the green phosphor. According to the configuration, the color purity of the green light emitted by the green phosphors is sufficiently high and the color purity of the red light emitted by the red phosphors is sufficiently high.

As illustrated in FIGS. 6 to 8, each LED board 18 has a horizontally-long rectangular shape. The LED boards 18 are held in the chassis 14 with the long edges (a length direction) corresponding with the X-axis direction and the short edges (a width direction) corresponding with the Y-axis direction to extend along the bottom portion 14a. The bases of the LED boards 18 are made of metal, for example, an aluminum-based material that is the same as the material of the chassis 14. Wiring traces (not illustrated) are formed on surfaces of the bases of the LED boards 18 via insulating layers. The wiring traces maybe formed from metal films such as copper foils. Reflection layers (not illustrated) exhibiting white color are formed on the outermost surfaces. Light rays emitted by the LEDs 17 and returned to the LED boards 18 are reflected by the reflection layers. The reflected light rays are directed to the front side and included in emitting light. An insulating material such as a ceramic material may be used for the bases of the LED boards 18. The LEDs 17 are surface-mounted on plate surfaces of the LED boards 18 facing the front side (plate surfaces facing the optical member 15 side), that is, the plate surfaces are the mounting surfaces 18a. The LEDs 17 are arranged in lines along the long edges of the LED boards 18 (the X-axis direction). The LEDs 17 in each line are connected in series with the trace formed on the corresponding LED board 18. Specifically, eight LEDs 17 are linearly arranged at intervals on the LED board 18. The LED boards 18 are arranged parallel to one another along the Y-axis direction with the long edges aligned with one another and the short edges aligned with one another. Specifically, four LED boards 18 are arranged along the Y-axis direction in the chassis 14 and the arrangement direction of the LED boards 18 corresponds with the Y-axis direction. Lines of the LEDs 17 are arranged along the X-axis direction (the row direction, along the long edges of the bottom portion 14a) which corresponds to the longitudinal direction of each LED board 18 within the plate surface of the bottom portion 14a of the chassis 14. Lines of the LEDs 17 are arranged along the Y-axis direction (the column direction, along the short edges of the bottom portion 14a) which corresponds to the arrangement direction of the LED boards 18. Namely, the LEDs 17 are arranged in a matrix. The LED boards 18 include connectors connected to wiring members that are not illustrated. Driving power is supplied from an LED driver circuit board (a light source driver circuit board) which is not illustrated to the LED boards 18 via the wiring members.

The diffuser lenses 19 are made of a substantially transparent synthetic resin material (having high light transmissivity) having a refractive index higher than that of the air (e.g., polycarbonate and acrylic). As illustrated in FIGS. 3 to 5, each diffuser lens 19 has a predefined thickness and a round shape in the plan view. The diffuser lenses 19 are attached to the LED boards 18 to cover the light emitting surfaces 17a of the LEDs 17 from the front side (the light exiting side), respectively. Namely, the diffuser lenses 19 overlap the respective LEDs 17 in the plan view. The number and the two-dimensional arrangement of the diffuser lenses 19 in the backlight unit 12 have the same relationship between the number and the two-dimensional arrangement of the LEDs 17. Light emitted by each LED 17 has high directivity. The light is diffused by the corresponding diffuser lens 19 and exits from the diffuser lens 19. Namely, the light emitted by the LED 17 is directed toward the optical members 15 with the directivity reduced when passing through the diffuser lens 19. Therefore, even if the interval between the adjacent LEDs 17 is large, the area between the adjacent LEDs 17 is less likely to be recognized as a dark area. Namely, the diffuser lenses 19 diffuse the light rays from the LEDs 17 and optically function as pseudo light sources. According to the configuration, the number of the LEDs 17 can be reduced. The diffuser lenses 19 are disposed concentrically with the respective LEDs 17 in the plan view.

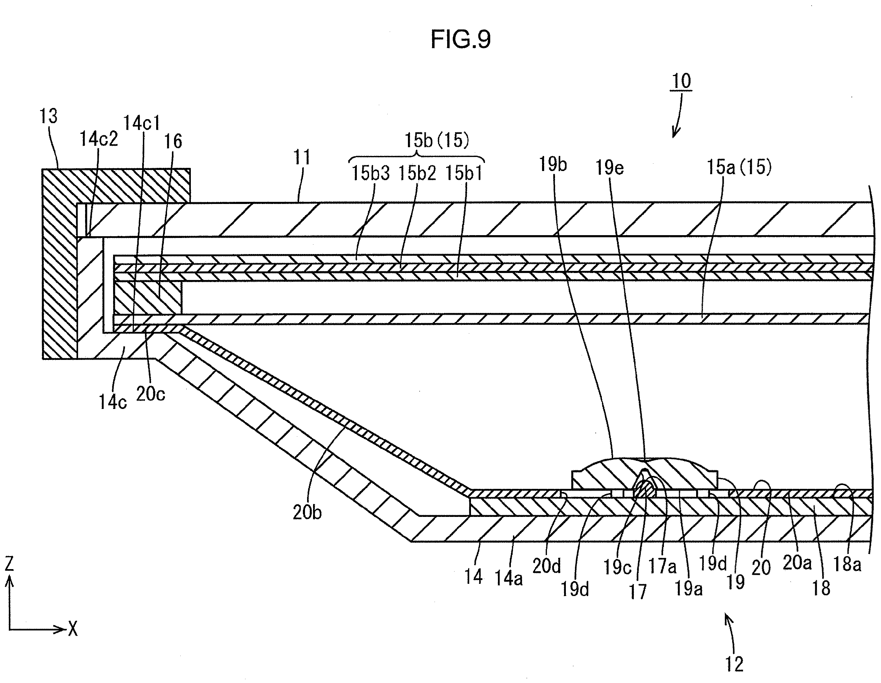

As illustrated in FIG. 9, surfaces of the diffuser lenses 19 facing the rear side and opposed to the LED boards 18 (the LEDs 17) are light entering surfaces 19a through which the light rays from the LEDs 17 enter. Surfaces of the diffuser lenses 19 facing the front side and opposed to the optical member 15 are light exiting surfaces 19b (light emitting surfaces) through which the light rays exit. The light entering surfaces 19a are substantially parallel to the plate surfaces of the LED boards 18 (the X-axis direction and the Y-axis direction). The light entering surfaces 19a have light entering-side recesses 19c in areas that overlap the LEDs 17 in the plan view to provide sloped surfaces that are sloped relative to the optical axes of the LEDs 17 (the Z-axis direction). Each light entering-side recess 19c has a cone-like shape with an inverted V shape in a cross-sectional view. The light entering-side recesses 19c are substantially concentrically with the diffuser lenses 19. The light rays emitted by the LEDs 17 and entering the light entering-side recesses 19c are refracted by the sloped surfaces in a wide angle range and enter the diffuser lenses 19. Mounting legs 19d project from the light entering surfaces 19a. The mounting legs 19d are mounting structures for the LED boards 18. Each light exiting surface 19b is a gentle spherical surface to refract the light rays from each diffuser lens 19 in a wide angle range to exit. In an area of the diffuser lens 19 overlapping the corresponding LED 17 in the plan view, light exiting-side recess 19e having a substantially mortar shape is formed. With the light exiting-side recess 19e, most of the light rays from the LED 17 are refracted in a wide angle range to exit.

The reflection sheet 20 has a white surface having high light reflectivity. As illustrated in FIGS. 2 to 8, the reflection sheet 20 has a size to cover about an entire area of the inner surface of the chassis 14. With the reflection sheet 20, the light rays inside the chassis 14 are reflected toward the front side (the light exiting side, the optical member 15 side). The reflection sheet 20 is formed in an earthenware mortar-like shape as a whole. The reflection sheet 20 includes a bottom reflecting portion 20a, four raised reflecting portions 20b, and extended portions 20c (outer edge portions). The bottom reflecting portion 20a extends along the bottom portion 14a of the chassis 14 and has a size to cover most of the bottom reflecting portion 20a. The raised reflecting portions 20b project from outer edges of the bottom reflecting portion 20a, respectively. The raised reflecting portions 20b are angled to the bottom reflecting portion 20a. The extended portions 20c extend outward from outer edges of the raised reflecting portions 20b, respectively. The extended portions 20c are placed on the first steps 14c1 of the side portions 14c of the chassis 14.

As illustrated in FIGS. 7 and 8, the bottom reflecting portion 20a of the reflection sheet 20 is disposed to overlap the front surfaces of the LED boards 18, that is, the mounting surfaces 18a on which the LEDs 17 are mounted on the front side. The bottom reflecting portion 20a extends parallel to the bottom portion 14a of the chassis 14 and the plate surface of the optical member 15. Therefore, a distance between the bottom reflecting portion 20a and the optical member 15 in the Z-axis direction is substantially constant for an entire area of the surface of the bottom reflecting portion 20a. The bottom reflecting portion 20a includes insertion holes 20d (light source insertion holes) at positions corresponding to the LEDs 17 in the plan view. The LEDs 17 and the diffuser lenses 19 are inserted in the respective insertion holes. The insertion holes 20d are arranged in a matrix along the X-axis direction and the Y-axis direction to correspond to the arrangement of the LEDs 17 and the diffuser lenses 19. Namely, the bottom reflecting portion 20a is disposed to overlap the LEDs 17 in the plan view and in an "LED arrangement area (light source arrangement area)" in the chassis 14. The raised reflecting portions 20b are angled to the plate surfaces of the bottom reflecting portion 20a and the optical member 15 entirely from rising bases to distal ends. A distance between each raised reflecting portion 20b and the optical member 15 in the Z-axis direction gradually decreases from the rising base to the distal end. The distance is the maximum at the distal end (about equal to the distance between the bottom reflecting portion 20a and the optical member 15 in the Z-axis direction) and the minimum at the rising base. The raised reflecting portions 20b are disposed in an "LED non-arrangement area (light source non-arrangement area)" in the chassis so as not to overlap the LEDs 17 in the plan view. The raised reflecting portions 20b disposed in the LED non-arrangement area are angled to the bottom reflecting portion 20a. Therefore, reflected light rays are angled at predefined degrees and thus a lack of light (a dark spot) is less likely to occur in the LED non-arrangement area.

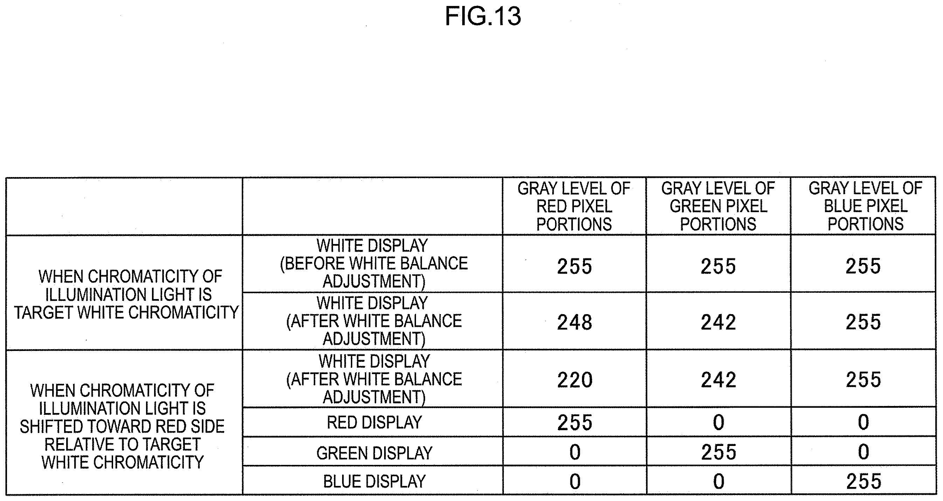

As illustrated in FIG. 12, the backlight unit 12 in this embodiment is configured to selectively increase an amount of emitting light rays in red (light rays in a first color) included in three colors of light when amounts of the three colors of emitting light required to obtain reference white light for illumination light applied to the liquid crystal panel 11 are defined as reference amounts (reference amounts of emitting light). In FIG. 12, the amount of the red emitting light rays required to obtain the reference white light for the illumination light is indicated by a two-dashed chain line. The control circuit board CTR adjusts the gray level of the red pixel portions PXR that exhibit a red color (first pixel portions that exhibit a first color) among the three colors of pixels PXR, PXG, and PXB to a level lower than the gray levels of the pixel portions that exhibit other colors, that is, the gray levels of the green pixel portions PXG and the blue pixel portions PXB for the white display, as illustrated in FIG. 13. For the red display, the control circuit board CTR adjusts the gray level of the green pixel portions PXG and the blue pixel portions PXB (display in first color) to levels lower than the gray levels of the green pixel portion PXG and the blue pixel portion PXB during the white display and the gray level of the red pixel portion PXR to a level higher than the gray level of the red pixel portion PXR during the white display. According to the configuration, the illumination light emitted by the backlight unit 12 is more reddish in comparison to the reference white light. Therefore, in the liquid crystal panel 11, the control circuit board CTR adjusts the gray level of the red pixel portions PXR to the level lower than the gray levels of the green pixel portion PXG and the blue pixel portion PXB for the white display. Through the control, the white display is performed. For the red display in the liquid crystal panel 11, the control circuit board CTR adjusts the gray levels of the green pixel portion PXG and the blue pixel portion PXB to the levels lower than the gray levels of the green pixel portions PXG and the blue pixel portions PXB during the white display and the gray level of the red pixel portions PXR to the level higher than the gray level of the red pixel portion PXR during the white display. Through the control, brightness during the red display becomes higher and a color reproduction range can be achieved. Improvement in a red color reproduction range tends to be more recognizable for human in comparison to other colors. Therefore, this configuration is preferable for improving display quality regarding images.

Specifically, the backlight unit 12 is configured such that the content of the red phosphors in the LEDs 17 is higher than the content of the red phosphors required to obtain the reference white light for the illumination light applied to the liquid crystal panel 11. Because the content of the red phosphors in the LEDs 17 is higher than the reference content of the red phosphors required to obtain the reference white light for the illumination light, the amount of red emitting light rays emitted by the red phosphors is larger than the reference amount of red emitting light rays required to obtain the reference white light for the illumination light as illustrated in FIG. 12 (the two-dashed chain line in FIG. 12). Therefore, target illumination light can be easily achieved without complicated control on the amount of the emitting light rays from the blue LED components 21. If the reference content of the red phosphors and the reference amount of emitting light rays required to obtain the reference white light for the illumination light are defined as 100 %, the content and the amount of the emitting light rays regarding the red phosphors are equal to or higher than 107 %. If the brightness of the red light rays during the red display when the illumination light is the reference white light is defined as 100 %, the brightness of the red light rays during the red display is equal to or higher than 105 %. Namely, a sufficiently large improvement can be achieved in brightness. When the improvement in brightness by 5% or more from the reference brightness is achieved, a user is more likely to recognize the increase in brightness of display images.

The reference white light regarding the illumination light applied to the liquid crystal panel 11 by the backlight unit 12 will be described. The reference white light has chromaticity on a blackbody radiation locus or in a band-shaped chromaticity range with a predefined width and the blackbody radiation locus at the center in the chromaticity diagram. Namely, the reference white light can be expressed by a specific color temperature or a correlated color temperature. Specifically, the reference white light may be defined as reference light A, reference light B, reference light C, or reference light D65. Alternatively, the reference white light may be defined as reference light DT with relative spectral distribution defined relative to correlated color temperature T or reference light defined by chromaticity in the band-shaped chromaticity range such as x and y chromaticity coordinates of (0.272, 0.277) in the CIE 1931 color space diagram. Reference light A is expressed by chromaticity coordinates (0.4476, 0.4074) in the CIE 1931 color space diagram and a color temperature of 2855.6 K (in kelvin (K)). Reference light B is expressed by chromaticity coordinates (0.3484, 0.3516) in the CIE 1931 color space diagram and a color temperature of 4874 K. Reference light C is expressed by chromaticity coordinates (0.3101, 0.3161) in the CIE 1931 color space diagram and a color temperature of 6774 K. Reference light D65 is expressed by chromaticity coordinates (0.3157, 0.3290) in the CIE 1931 color space diagram and a color temperature of 6504 K.

Next, adjustment of the gray levels of the pixel portions PXR, PXG, and PXB by the control circuit board CTR will be described in detail. As described earlier, the control circuit board CTR properly controls the pixel portions PXR, PXG, and PXB within the 256 grayscale range to achieve about 1,670,000 display colors for the display pixels PX. For the white display by the display pixels PX, the control circuit board CTR controls the pixel portions PXR, PXG, and PXB to increase the gray levels of the pixel portions PXR, PXG, and PXB to the maximum and to have the gray levels with proper white balance to achieve target white chromaticity. For the single color display of red, green, or blue by the display pixels PX, the control circuit board CTR controls the pixel portions PXR, PXG, and PXB to adjust the gray level of the pixel portions PXR, PXG, or PXB used for the single color display to the maximum and to adjust the gray levels of other two colors of the pixel portions among the pixel portions PXR, PXG, and PXB to the minimum.

If the chromaticity of the illumination light from the backlight unit is about equal to the target white chromaticity for the white display in the liquid crystal panel 11, the control circuit board CTR sets the gray levels of the pixel portions PXR, PXG, and PXB to 255, which is the maximum, for the white display performed by the display pixels PX as illustrated in FIG. 13. Practically, the white balance is adjusted according to individual differences including a difference in chromaticity of the illumination light from the backlight unit (or LEDs) and spectral transmission of the color filters 11k of the liquid crystal panel 11. Therefore, the gray levels of the red pixel portions PXR, the green pixel portions PXG, and the blue pixel portions PXB are set to 248, 242, and 255, respectively to enable the target white display performed by the display pixels PX. The gray levels of the pixel portions PXR, PXG, and PXB in accordance with the white balance adjustment may be altered according to the individual difference.

In this embodiment, the backlight unit 12 is configured to selectively increase the amount of the red emitting light rays from the reference amount of emitting light rays in each color required to obtain the reference white light for the illumination light. Therefore, the illumination light is reddish. The chromaticity of the illumination light is different from the target white chromaticity for the white display in the liquid crystal panel 11, that is, shifted to the red side. The control circuit board CTR adjusts the gray level of the red pixel portions PXR to a level lower than the gray levels of the pixel portions PXG and PXB in other two colors for the white display performed by the display pixels PX. Specifically, after the white balance is adjusted, the control circuit board CTR sets the gray level of the green pixel portions PXG to 242, the gray level of the blue pixel portions PXB to 255, and the gray level of the red pixel portion PXR to 220 for the display with the target white chromaticity performed by the display pixels PX. The illumination light from the backlight unit 12 includes a larger number of red light rays than the numbers of green light rays and blue light rays. Therefore, the control circuit board CTR sets aperture (easiness of light to pass) of the red pixel portions RPX in the liquid crystal panel 11 lower than apertures of the green pixel portions PXG and the blue pixel portions PXB to set the chromaticity of the display pixels PX to the target white chromaticity. In the liquid crystal panel 11, it is preferable to set the target white chromaticity for the white display to have a color temperature of about 12000 K; however, it is not limited to such a setting.

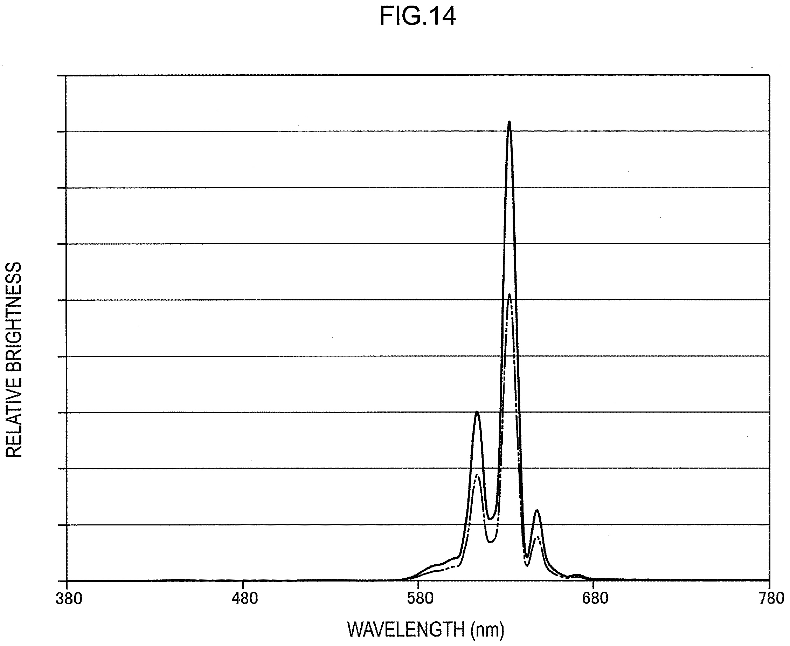

For the single color display of red, the control circuit board CTR adjusts the gray levels of the green pixel portions PXG and the blue pixel portions PXB to a level lower than the gray levels of the green pixel portions PXG and the blue pixel portions PXB during the white display and the gray level of the red pixel portions PXR to the level higher than the gray level of the red pixel portions PXR during the white display. Specifically, the control circuit board CTR sets the gray levels of the green pixel portions PXG and the blue pixel portions PXB to 0, which is the minimum and the gray level of the red pixel portions PXR to 255, which is higher than 220 for the white display, as illustrated in FIG. 13 to enable the target red display performed by the display pixels PX. Namely, the gray level of the red pixel portions PXR is at the maximum for the red display. In the illumination light from the backlight unit 12, the amount of the red emitting light rays is selectively larger than the amount of the emitting light rays in each color required to obtain the reference white light. The red light rays with the selectively increased amount pass through the red pixel portions PXR at the maximum during the red display. As illustrated in FIG. 14, the amount of the passing red light rays is at the maximum and the red displayed by the display pixels PX has higher color purity. Therefore, higher brightness can be achieved during the red display and a wider color reproduction range can be achieved. FIG. 14 illustrates transmission spectra of the liquid crystal panel 11 for the red display. The horizontal axis and the vertical axis in FIG. 14 represent wavelength (unit: nm) and relative brightness (no unit), respectively.

As illustrated in FIG. 13, for the green display, the control circuit board CTR sets the gray level of the green pixel portions PXG to 255, which is the maximum, and the gray levels of the red pixel portions PXR and the blue pixel portions PXB to 0, which is the minimum to enable the target green display performed by the display pixels PX. For the blue display, the control circuit board CTR sets the gray level of the blue pixel portions PXB to 255, which is the maximum, and the gray levels of the red pixel portions PXR and the green pixel portions PXG to 0, which is the minimum, to enable the target blue display performed by the display pixels PX.

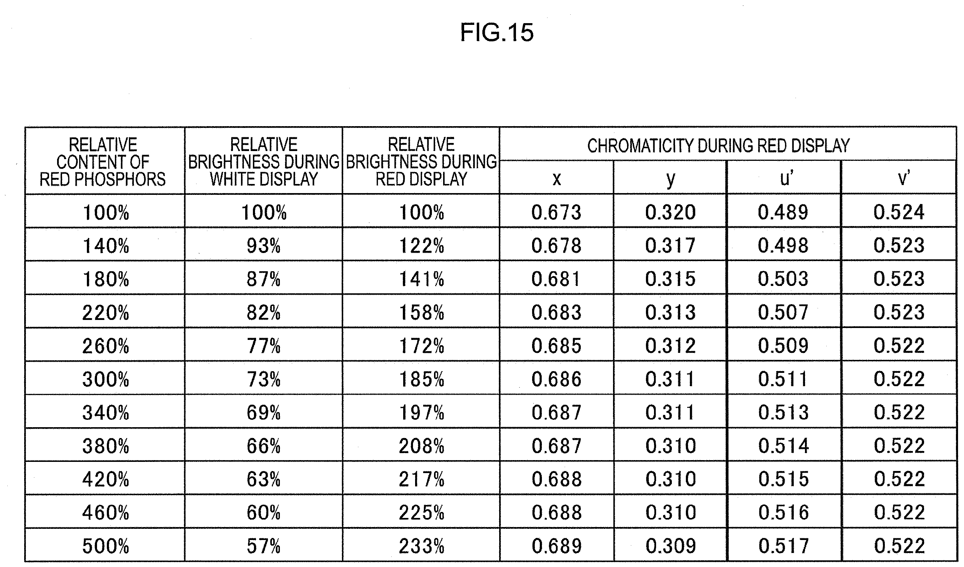

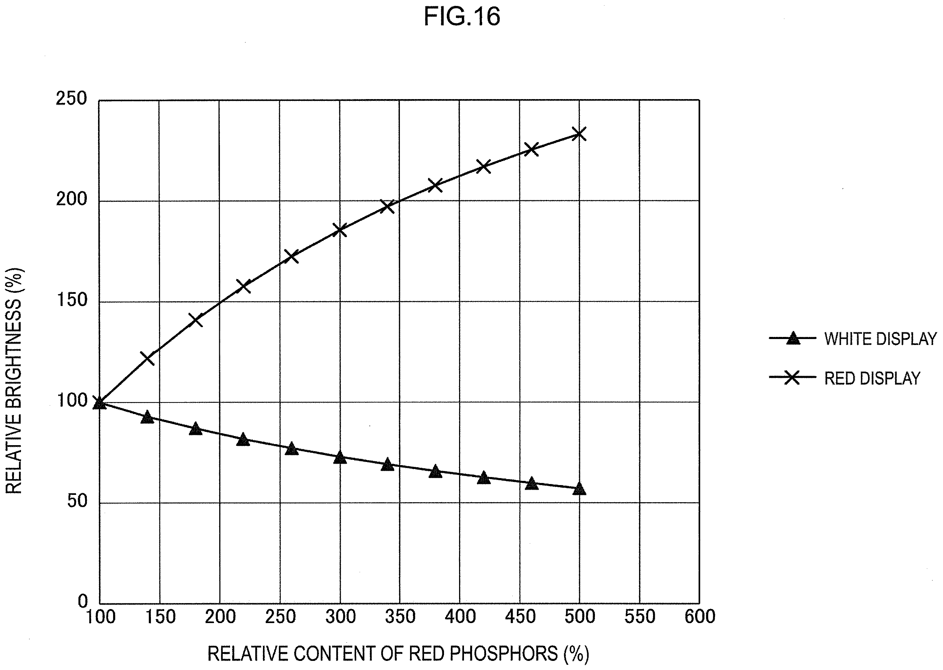

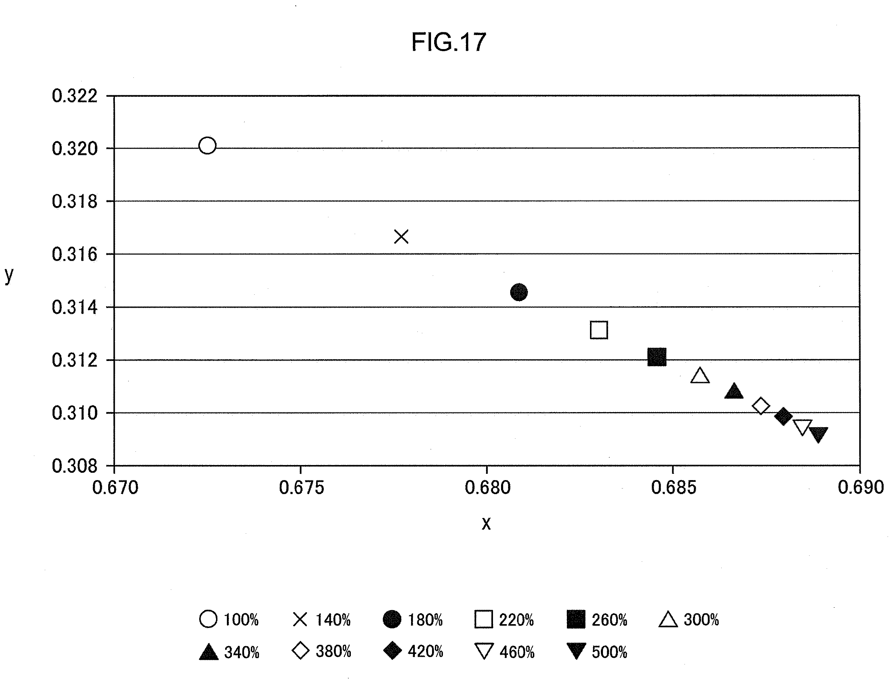

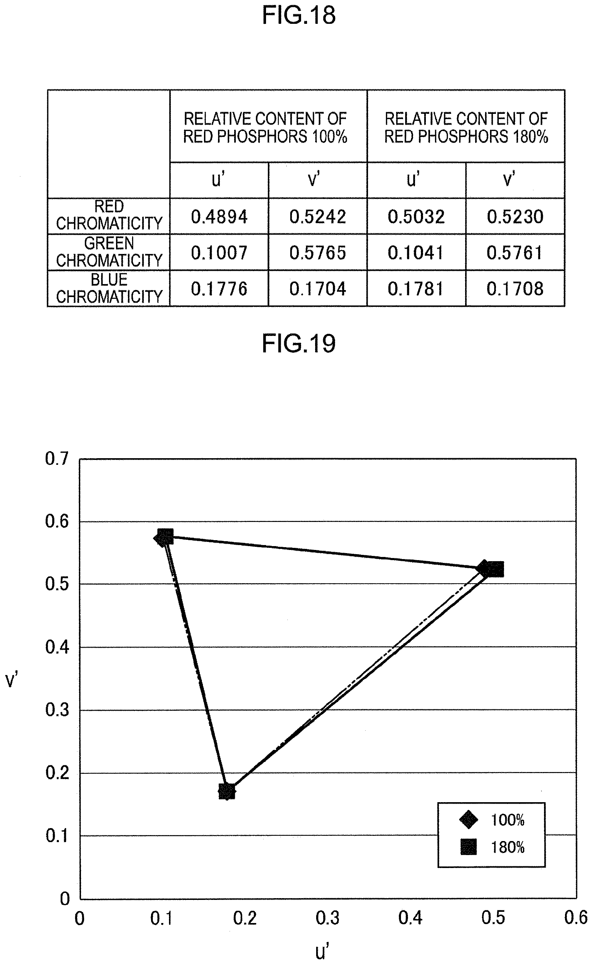

To prove the actions and the effects described above, comparative experiment 1 was conducted. In comparative experiment 1, the brightness during the white display, the brightness during the red display, and the chromaticity during the red display were measured to observe variations when the content of the red phosphors in the LED 17 was increased from the reference content of the red phosphors required to obtain the reference white light for the illumination light from the backlight unit 12. In comparative experiment 1, the relative content of the red phosphors was increased stepwise from the reference content to a content that is five times higher than the reference content and the relative brightness during the white display and the relative brightness during the red display were measured. In comparative experiment 1, the relative content of the red phosphors was set to 100%, 140%, 180%, 220%, 260%, 300%, 340%, 380%, 420%, 460%, and 500%, where the reference content of the red phosphors is defined as 100%. The relative brightness at each setting was measured (FIGS. 15 to 17). In comparative experiment 1, the chromaticity during the red display, the green display, and the blue display at the relative content of the red phosphors of 100% and when the relative content of the red phosphors is defined as 180% was measured (FIGS. 18 and 19). Results of comparative experiment 1 are present in FIGS. 15 to 19. FIG. 15 is a table illustrating the relative content of the red phosphors, the relative brightness during the white display, the relative brightness during the red display, and the chromaticity during the red display. In FIG. 15, the chromaticity during the red display is expressed by x and y coordinates in the CIE 1931 color space diagram and u' and v' coordinates in the CIE 1976 color space diagram. FIG. 16 is a graph including the horizontal axis that represents relative value (in unit of %) regarding the content of the red phosphors when the reference content of the red phosphors is defined as 100% and the vertical axis that represents relative value (in unit of %) regarding the brightness during the white display and the brightness during the red display when the content of the red phosphors is equal to the reference content. In FIG. 16, points indicated by "x" represent measurements during the red display and points indicated by "▲" represent measurements during the white display. FIG. 17 is the CIE 1931 color space diagram illustrating variations in red chromaticity during the red display according to variations in relative content of the red phosphors. FIG. 18 is a table illustrating the chromaticity of each color of red, green, and blue when the relative content of the red phosphors is defined as 100% and when the relative content of the red phosphors is defined as 180%. FIG. 19 is the CIE 1976 color space diagram illustrating the chromaticity of each color of red, green, and blue when the relative content of the red phosphor is defined as 100% and when the relative content of the red phosphor is defined as 180%. Two-dashed chain lines and points indicated by "◆" represent the chromaticity region when the reference content of the red phosphors is defined as 100%. Solid lines and points indicated by "▪" represent the chromaticity region when the relative content of the red phosphors is defined as 180%.

The results of comparative experiment 1 will be described. According to FIGS. 15 and 16, as the content of the red phosphors increases, the relative brightness during the white display tends to decrease but the relative brightness during the red display tends to improve. The reason why the relative brightness during the white display decreases is that the gray level of the red pixel portions PXR needs to be decreased during the white display because the amount of the red emitting light rays increases as the relative content of the red phosphors increases. The reason why the relative brightness during the red display improves is that the amount of the red emitting light rays increases as the relative content of the red phosphors increases but the gray level of the red pixel portions PXR is set to the maximum for the red display and thus the red emitting light rays are used for the display without adjustment on the increased amount of the red emitting light rays. Especially, according to FIG. 16, when the relative content of the red phosphors is higher than 107%, the relative brightness during the red display is higher than 105%. Therefore, it is preferable to set the relative content of the red phosphors equal to or higher than 107% to achieve a sufficient level of improvement in brightness for the red display. The relative content of the red phosphors tends to be proportional to the relative amount of emitting red light rays emitted by the red phosphors. Therefore, it is preferable that the relative amount of the red emitting light rays is equal to or higher than 107%.

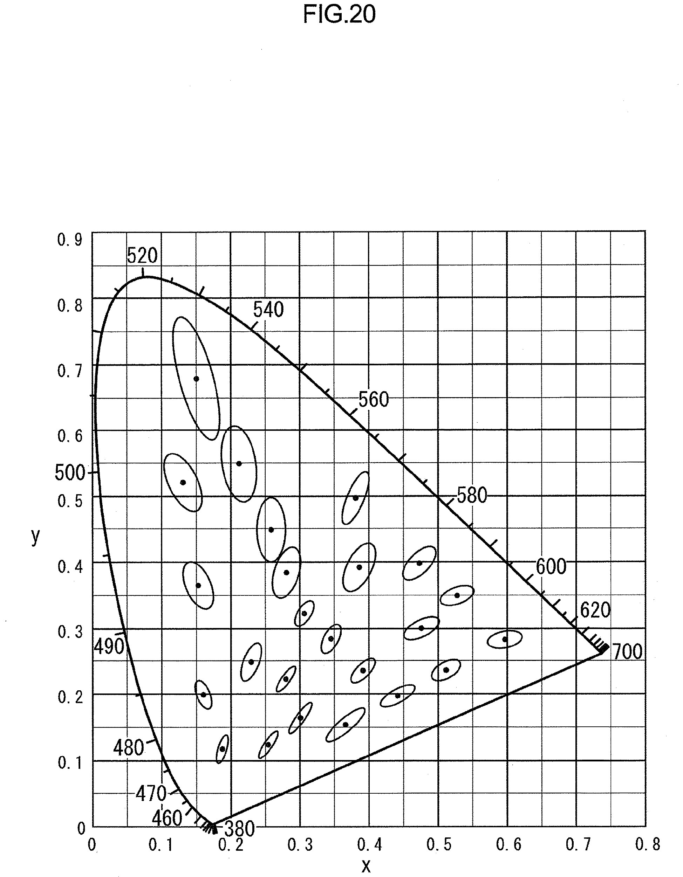

According to FIGS. 15 and 17, the x coordinate of the red chromaticity during the red display tends to increase and the y coordinate of the red chromaticity during the red display tends to decrease as the relative content of the red phosphors increases. The increase of the x coordinate and the decrease of the y coordinate of the red chromaticity during the red display indicate shifting of the red wavelength region of the spectral locus toward the larger wavelength side in the CIE 1931 color space diagram in FIG. 20. Namely, as the relative content of the red phosphors increases, the red color region during the red display expands and thus the color reproducibility improves. The increase of the x coordinate and the decrease of the y coordinate of the red chromaticity during the red display further indicate shifting of the MacAdam ellipses around the red wavelength region along the short axis direction in the CIE 1931 color space diagram illustrated in FIG. 20. The MacAdam ellipses represent the chromaticity range, colors in which human cannot recognize differences between colors. By shifting the MacAdam ellipses along the short axis direction, differences in tone of the red color can be more clearly recognized by human. Namely, the user can more easily recognize vivid red during the red display. Therefore, it is preferable in improvement of the display quality. FIG. 20 is the CIE 1931 color space diagram illustrating the spectral locus, the line of purples, and the MacAdam ellipses. According to FIGS. 18 and 19, the red color region when the content of the red phosphors is defined as 180% is expanded in comparison to the red color region when the content of the red phosphors is defined as 100%. As the relative content of the red phosphors increases, the red color gamut during the red display expands and thus the color reproducibility improves. According to FIG. 15, when the content of the red phosphors is defined as 180%, the relative brightness during the red display is 141%. Namely, sufficient brightness improvement effect is achieved.

As described above, the liquid crystal display device 10 (a display device) according to this embodiment includes the liquid crystal panel 11 (a display panel), the backlight unit 12, and the control circuit board CTR (a pixel controller). The liquid crystal panel 11 includes the pixel portions PXR, PXG, and PXB configured to exhibit different colors. The backlight unit 12 is configured to apply the illumination light including the light rays in multiple colors exhibiting different colors to the liquid crystal panel 11. The backlight unit 12 is configured such that the amount of the emitting light rays in the first color included in the light rays is selectively increased when the amount of the emitting light rays in each color required to obtain the reference white light for the illumination light is defined as the reference amount. The control circuit board CTR is configured to adjust the gray level of the red pixel portions PXR (first pixel portions) configured to exhibit the red color (a first color) among the pixel portions PXR, PXG, and PXB to a level lower than the gray levels of the pixel portions PXG and PXB configured to exhibit other colors for the white display and to adjust the gray levels of the pixel portions PXG and PXB configured to exhibit other colors to a level lower than the gray levels thereof for the white display and the gray level of the red pixel portions PXR to a level higher than the gray level thereof for the white display.

According to the configuration, the illumination light including the light rays emitted by the backlight unit 12 is passed through the pixel portions PXR, PXG, and PXB included in the liquid crystal panel 11 according to the gray levels thereof so that the pixel portions PXR, PXG, and PXB exhibit the different colors to display a predefined image. The illumination light from the backlight unit 12 is more reddish than the reference white light. Therefore, for the white display in the liquid crystal panel 11, the gray level of the red pixel portions PXR that exhibit the red color is adjusted below the gray levels of the pixel portions PXG and PXB that exhibit other colors by the control circuit board CTR. Through the control, the white display is performed. For the red display in the liquid crystal panel 11, the gray levels of the pixel portions PXG and PXB that exhibit other colors are adjusted below the gray levels thereof during the white display and the gray level of the red pixel portions PXR is adjusted above the gray level during the white display. Therefore, the brightness regarding the red color during the red display increases and the wider color reproduction range can be achieved.

The liquid crystal panel 11 is configured such that the pixel portions PXR, PXG, and PXB include at least the red pixel portions PXR that are configured to exhibit the red color, the green pixel portions PXG that are configured to exhibit the green color, and the blue pixel portions PXB that are configured to exhibit the blue color. The light rays in the multiple colors emitted by the backlight unit 12 include at least the red light rays, the green light rays, and the blue light rays. The light rays in the first color are the red light rays. The control circuit board CTR performs the control with the red pixel portions PXR as the first pixel portions. According to the configuration, the brightness regarding the red color during the red display can be increased and thus the color reproduction range can be expanded. The expansion of the color reproduction range of the red color is more likely to be recognized by human in comparison to other colors. Therefore, this configuration is more preferable for the improvement of the display quality regarding the image.

The backlight unit 12 is configured such that the amount of the red emitting light rays is equal to or higher than 107% when the amount of the emitting light rays in each color required to obtain the reference white light for the illumination light is defined as 100%. According to the configuration, when the brightness of the red light rays based on the amount of the emitting light rays in the illumination light that is equal to the reference white light is defined as 100%, the brightness is equal to or higher than 105%, that is, such a larger improvement can be achieved in the brightness regarding the red color during the red display.

The backlight unit 12 includes the blue LED components 21 (the light emitting components) configured to emit the light rays and the phosphors configured to convert the wavelength of the light rays emitted by the blue LED components 21. The phosphors include at least the red phosphors (first phosphors) configured to emit red light. The backlight unit 12 is configured that the content of the red phosphors is relatively high when the content of the phosphors required to obtain the reference white light for the illumination light is defined as the reference content. According to the configuration, the wavelength of at least some of the light rays emitted by the blue LED components 21 is converted by the phosphors and the illumination light is produced by the backlight unit 12. The content of the red phosphors included in the phosphors is higher than the content of the phosphors required to obtain the reference white light for the illumination light. Therefore, the amount of the red emitting light rays emitted by the red phosphors is larger than the reference amount of the emitting light rays in each color required to obtain the reference white light for the illumination light. According to the configuration, the target illumination light can be easily produced without complicated control on the amount of the emitting light rays from the blue LED components 21.

The backlight unit 12 includes the LEDs 17 (the light sources). The LEDs 17 include at least the blue LED components 21, the cases 23, and the sealants 22. The cases 23 hold the blue LED components 21, respectively. The sealants 22 seal the blue LED components 21 in the respective cases 23. The sealants 22 contain the phosphors. According to the configuration, at least some of the light rays emitted by the blue LED components 21 are used as excitation light rays with the phosphors contained in the sealants 22 that seal the blue LED components 21 in the cases 23.

The red phosphors in the LEDs 17 are the potassium silicofluoride using manganese for the activator. Because the full width at half maximum of the main peak in the emission spectrum of the potassium silicofluoride that are the red phosphors is sufficiently small, the red light rays with high purity are emitted. The potassium silicofluoride does not include the rare earth element, which is an expensive material. Therefore, the production cost of the LEDs 17 can be reduced. The potassium silicofluoride is less likely to cause performance degradation due to moisture and thus suitable for substances to be contained in the sealants 22 for sealing the blue LED components 21 in the cases 23.

The television device 10TV according to this embodiment includes the liquid crystal display device 10 described above. According to such a television device 10TV, the brightness of the red color during the red display can be increased and the large color reproduction range can be achieved. Therefore, images can be display on the television device with high display quality.

### <Second Embodiment>

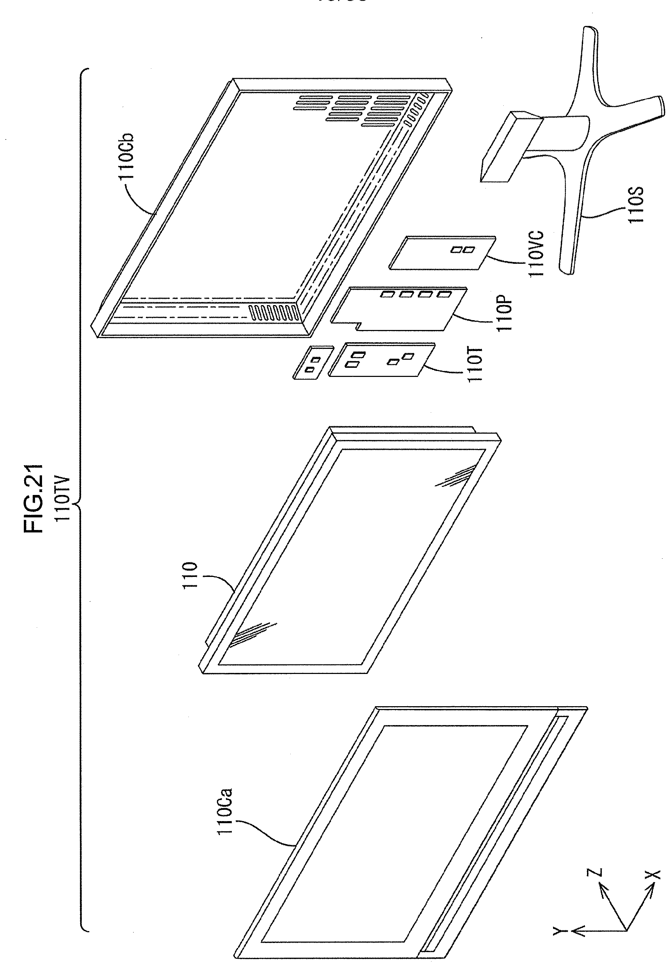

A second embodiment of the present invention will be described with reference to FIGS. 21 to 29. The second embodiment includes four colors of color filters 111k. Configurations, functions, and effects similar to those of the first embodiment will not be described.

As illustrated in FIG. 21, a liquid crystal display device 110 in a television device 110TV according to this embodiment includes a video conversion circuit board 110VC. The video conversion circuit board 110VC converts television video signals output by a tuner 110T into video signals for the liquid crystal display device 110. Specifically, the video conversion circuit board 110VC converts the television signals into blue, green, red, and yellow video signals and outputs the video signals to the control circuit board (not illustrated, see FIG. 11) connected to a liquid crystal panel 111. The television device 110TV includes a pair of cabinets 110Ca and 110Cb, a power supply 110P, and a stand 110S having configurations similar to those of the first embodiment.

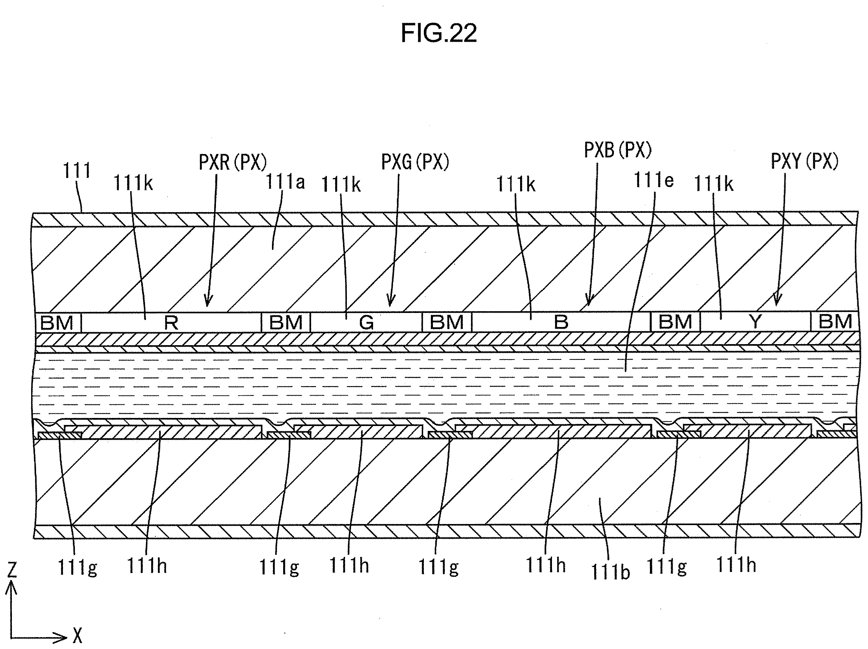

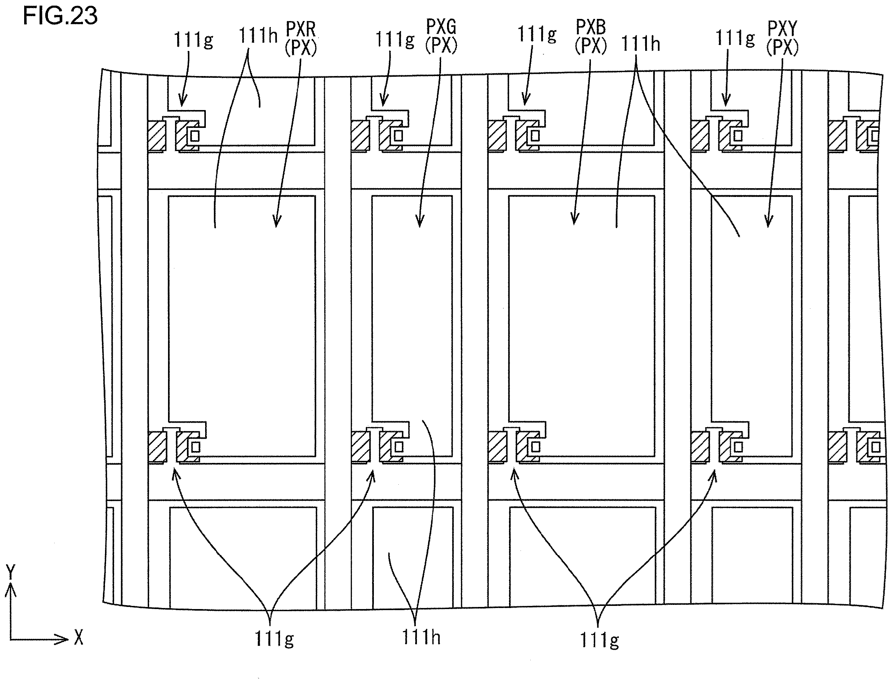

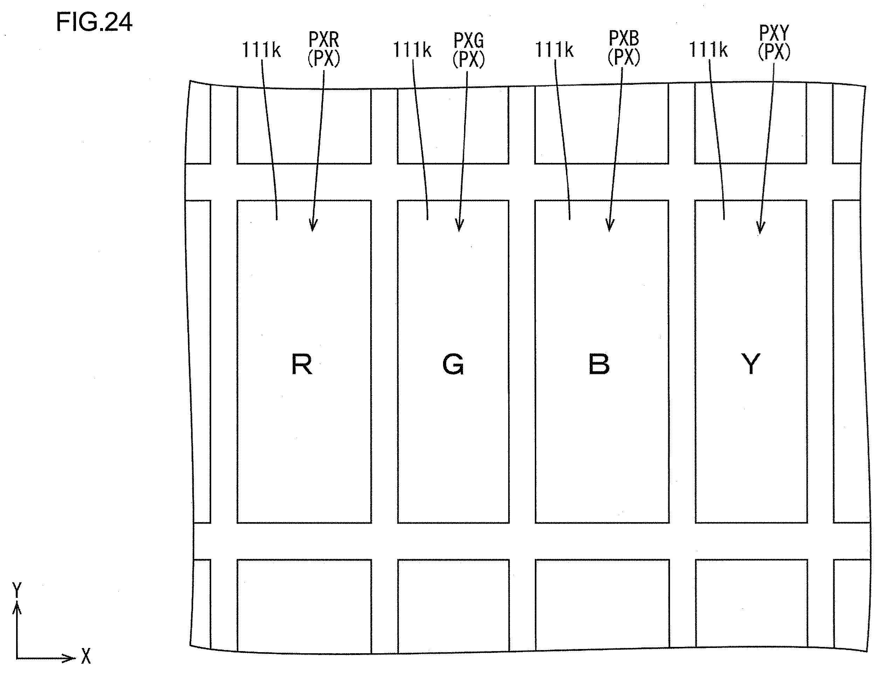

As illustrated in FIGS. 22 and 24, color filters 111k formed on an inner surface of a CF substrate 111a included in the liquid crystal panel 111 include yellow color filters in addition to red, green, and blue color filters. The color portions in four colors are repeatedly arranged in predefined sequence. The yellow color filters 11k selectively pass light rays in the yellow wavelength range, that is, light rays in the red wavelength range and light rays in the green wavelength range. The yellow color filters 111k pass red light rays and green light rays. The red color filters 111k and the blue color filters 111k have dimensions in the X-axis direction and areas larger than those of the green color filters 111k and the yellow color filters 111k, for example, about 1.6 times larger. The dimensions in the X-axis direction and the areas of the red color filters 111k and the blue color filters 111k are about equal to one another. The dimensions in the X-axis direction and the areas of the green color filters 111k and the yellow color filters 111k are about equal to one another. As illustrated in FIGS. 22 and 23, pixel electrodes 111h opposed to the red color filters 111k and the blue color filters 111k have a dimension in the X-axis direction and an area larger than those of pixel electrodes 111h opposed to the green color filters 111k and the yellow color filters 111k, for example, about 1.6 times larger.

In the liquid crystal panel 111, the red color filter 111k, the green color filter 111k, the blue color filter 111k, the yellow color filter 111k, and four pixel electrodes 111h opposed to the color filters 111k form one display pixel PX, which is a display unit. The display pixel PX includes a red pixel portion PXR, a green pixel portion PXG, a blue pixel portion PXB, and a yellow pixel portion PXY. The yellow pixel portion PXY is formed from the yellow color filter 111k and the pixel electrode 111h opposed to the yellow color filter 111k. Pixel portions PXR, PXG, PXB, and PXY are repeatedly arranged on a plate surface of the liquid crystal panel 111 along the row direction (the X-axis direction) to form lines of pixels. The lines of pixels are arranged along the column direction (the Y-axis direction). Voltages are applied to the pixel electrodes 111h of the pixel portions PXR, PXG, PXB, and PXY, respectively, by TFTs 111g connected to the pixel electrodes 111h. Orientation conditions of a liquid crystal layer 111e at the pixel portions PXR, PXG, PXB, and PXY change according to the voltages. Namely, amounts of transmitting light rays through the liquid crystal panel 111 are individually controlled for the pixel portions PXR, PXG, PXB, and PXY. Dimensions in the of the display pixels in the X-axis direction and the Y-axis direction and an area of the display pixels PX according to this embodiment are the same as those of the first embodiment.

The liquid crystal panel 111 having such a configuration is driven by inputting signals from a control circuit board, which is not illustrated. The television video signals output by the tuner 110T are converted into blue, green, red, and yellow video signals by the video conversion circuit board 110VC illustrated in FIG. 21 and those color video signals are input to the control circuit board. In the liquid crystal panel 111, amounts of the transmitting light rays through the pixel portions PXR, PXG, PXB, and PXY are adjusted as appropriate. The color filters 111k of the liquid crystal panel 111 include the yellow color filters in addition to the color filters in three primary colors of light. The color gamut of images displayed with the transmitting light rays is expanded and thus image display with high color reproducibility can be provided. The light rays that have passed the yellow color filters 111k have the wavelength closer to the peak of a luminous curve. Therefore, human eyes may perceive the light rays as bright light although energy levels of the light rays are low. Therefore, even if outputs of LEDs included in a backlight unit, which is not illustrated, are reduced, a sufficient level of the brightness can be achieved and thus power consumption of the LEDs can be reduced. Effects including high environmental performance can be achieved.

The display pixels PX including the pixel portions PXR, PXG, PXB, and PXY in the four colors have the area the same as that of the first embodiment. The display pixels PX include the pixel portions PXR, PXG, PXB, and PXY in the four colors. The area of each of the pixel portions PXR, PXG, PXB, and PXY is smaller than the area of each of the pixel portions PXR, PXG, and PXB. Although the areas of the red pixel portions PXR and the blue pixel portions PXB is about 1.6 times larger than the area of the green pixel portions PXG and the yellow pixel portions PXY, the area of each of the pixels PXR, PXG, PXB, and PXY in this embodiment is still smaller than that of the first embodiment. Specifically, when an area ratio of the green pixel portion PXG and the yellow pixel portion PXY is defined as 1.0, an area ratio of the red pixel portion PXR and the blue pixel portion PXB is 1.6 while an area ratio of the pixel portions PXR, PXG, and PXB in the first embodiment is 1.73.

The backlight unit that supplies illumination light to the liquid crystal panel 111 having such a configuration is configured that an amount of red emitting light rays includes in three colors of light rays is selectively increased when an amount of emitting light rays in each of the three colors required to obtain the reference white light for the illumination light similarly to the first embodiment. The control circuit board configured to control the driving of the liquid crystal panel 111 performs control such that the gray level of the red pixel portions PXR among the pixel portions PXR, PXG, PXB, and PXY is lower than the gray levels of the green pixel portions PXG, the blue pixel portions PXB, and the yellow pixel portions PXY during the white display, and the gray levels of the green pixel portions PXG, the blue pixel portions PXB, and the yellow pixel portions PXY during the red display are lower than the gray levels of those during the white display and and the gray level of the red pixel portions PXR during the red display is higher than the gray level of that during the white display. According to the configuration, the illumination light from the backlight unit is more reddish in comparison to the reference white light. Therefore, in the liquid crystal panel 111, the gray level of the red pixel portions PXR is reduced lower than the gray levels of the green pixel portions PXG, the blue pixel portions PXB, and the yellow pixel portion PXY by the control circuit board for the white display. Through thee control, the white display is performed. The yellow pixel portions PXY pass not only the green light rays but also the red light rays. Therefore, the gray level of the yellow pixel portions PXY is reduced lower than the gray levels of the green pixel portions PXG and the blue pixel portions PXB by the control circuit board for the white display. In the liquid crystal panel 111, the gray levels of the green pixel portions PXG, the blue pixel portions PXB, and the yellow pixel portions PXY are reduced lower than the gray levels of those in the white display and the gray level of the red pixel portions PXR is increased above the gray level in the white display by the control circuit board for the red display. According to the configuration, the brightness of the red color during the red display can be increased and thus wider color reproduction range can be achieved.

In comparison to the liquid crystal panel 11 in the first embodiment, the area ratio of each pixel portions PXR, PXG, PXB, or PXY in the liquid crystal panel 111 in this embodiment is smaller. Because the amount of red emitting light rays in the illumination light in the backlight unit is larger, a rate of increase in brightness regarding the red light rays during the red display is higher. Furthermore, because the amount of the red emitting light rays in the illumination light in the backlight unit is larger, the illumination light is more reddish. In comparison to the illumination light that is the reference white color light, the chromaticity of the yellow color during the yellow display will be shifted toward the red side. Such a shift of the chromaticity of the yellow color occurs because the yellow color filters 111k pass some of the red light rays. This configuration is preferable for expanding the color reproduction range.

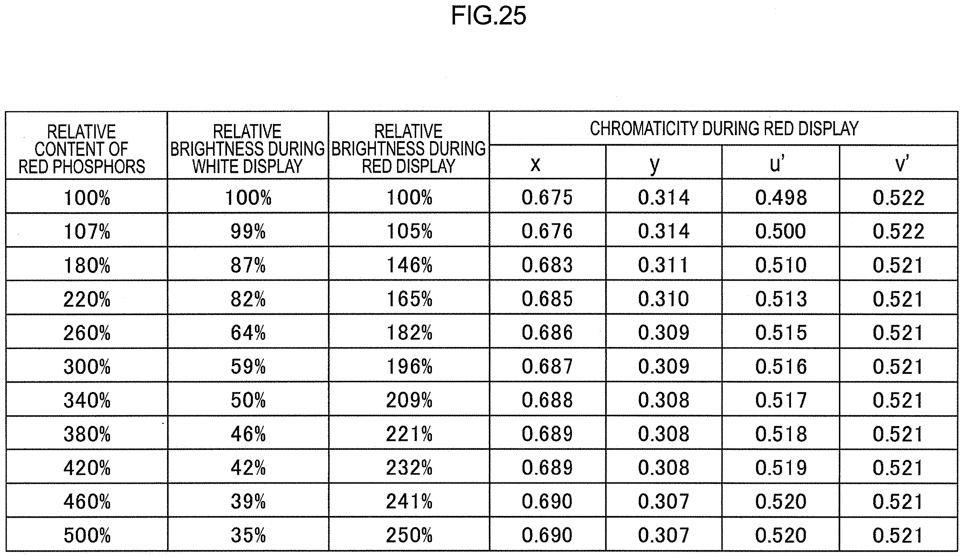

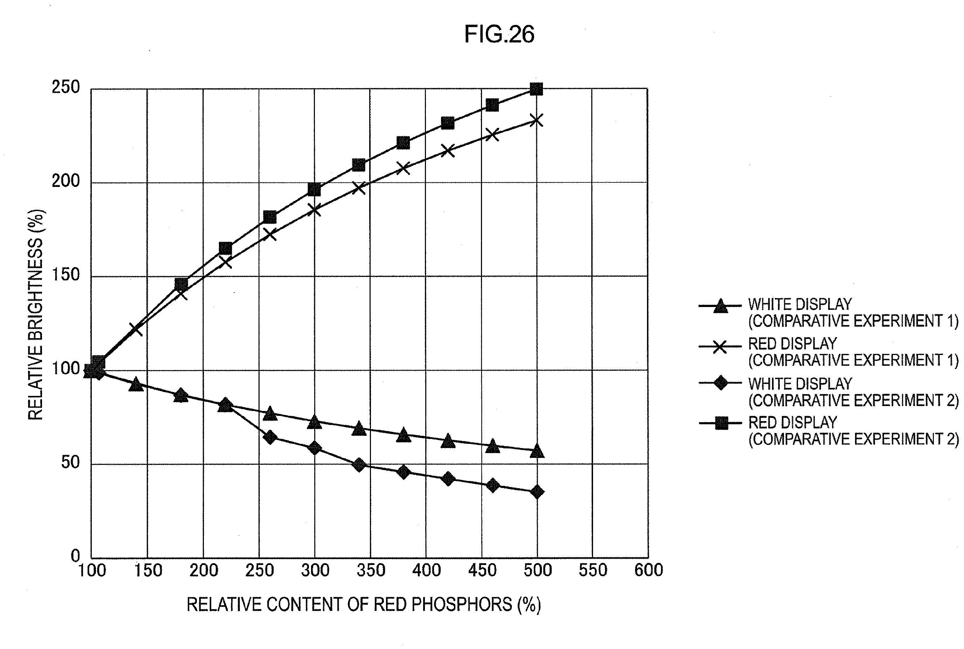

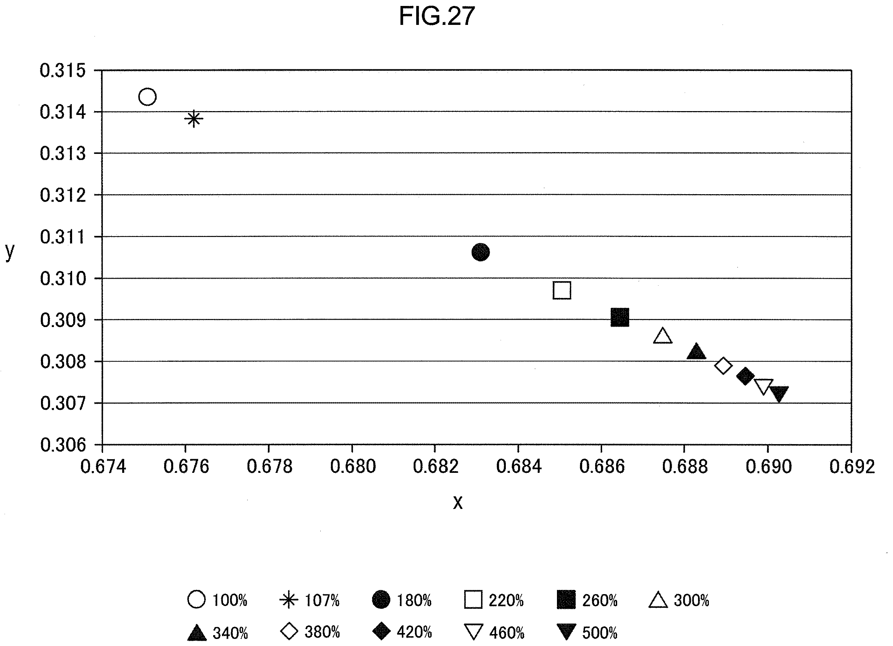

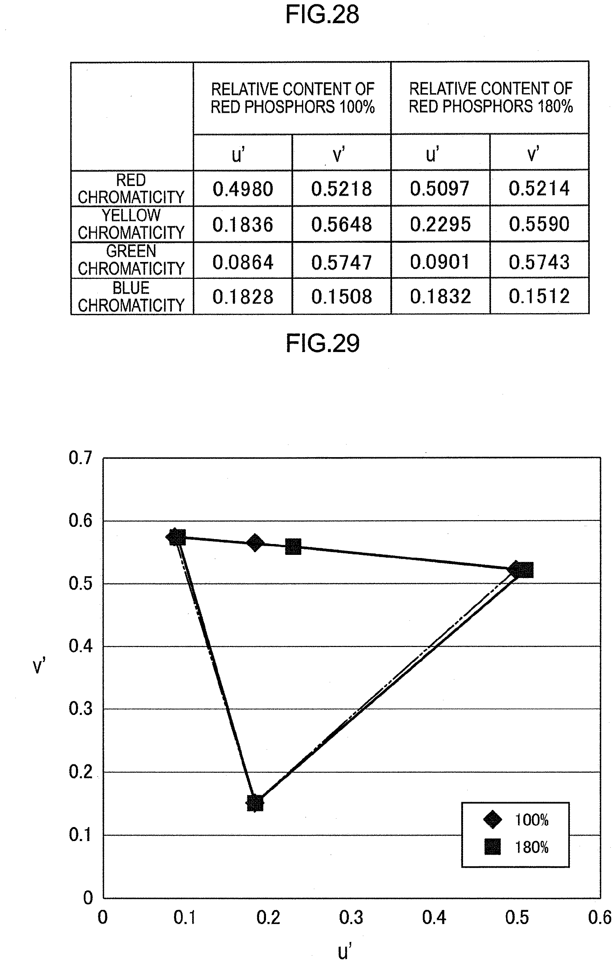

To prove the actions and the effects described above, comparative experiment 2 was conducted. In comparative experiment 2, brightness during the white display, brightness during the red display, and chromaticity during the red display were measured to observe how they varied when the content of the red phosphors to be included in each LED was increased from the reference content of the red phosphors required to obtain the reference white light for the illumination light from the backlight unit for the liquid crystal panel 111 including four colors of the pixel portions PXR, PXG, PXB, and PXY. Specifically, in comparative experiment 2, the relative content of the red phosphors was increased stepwise from the reference content of the red phosphors to the content that was five times higher than the reference content. The relative brightness during the white display and the relative brightness during the red display were measured for each case. More specifically, in comparative experiment 2, the relative content of the red phosphors was set to 100%, 107%, 180%, 220%, 260%, 300%, 340%, 380%, 420%, 460%, and 500%, where the reference content of the red phosphors is defined as 100%. The relative brightness at each setting was measured (FIGS. 25 to 27). In comparative experiment 2, the chromaticity during the red display, the chromaticity during the yellow display, the chromaticity during the green display, and the chromaticity during the blue display at the relative content of the red phosphors of 100% and at the relative content of the red phosphors of 180% were measured (FIGS. 28 and 29). Results of comparative experiment 2 are present in FIGS. 25 to 29. FIG. 25 is a table illustrating the relative content of the red phosphors, the relative brightness during the white display, the relative brightness during the red display, and the chromaticity during the red display. In FIG. 25, the chromaticity during the red display is expressed by x and y coordinates in the CIE 1931 color space diagram and u' and v' coordinates in the CIE 1976 color space diagram. FIG. 26 is a graph including the horizontal axis that represents relative value (in unit of %) regarding the content of the red phosphors when the reference content of the red phosphors is defined as 100% and the vertical axis that represents relative value (in unit of %) regarding the brightness during the white display and the brightness during the red display when the content of the red phosphors is the reference content. In FIG. 26, points indicated by "▪" represent measurements during the red display and points indicated by "◆" represent measurements during the white display. In FIG. 26, the results of comparative experiment 1 (points indicated by "×" and points indicated by "▲") are also present for reference. FIG. 27 is the CIE 1931 color space diagram illustrating variations in red chromaticity during the red display according to variations in relative content of the red phosphors. FIG. 28 is a table illustrating the chromaticity of each color of red, green, and blue when the relative content of the red phosphors is defined as 100% and when the relative content of the red phosphors is defined as 180%. FIG. 29 is the CIE 1976 color space diagram illustrating the chromaticity of each color of red, green, and blue when the relative content of the red phosphor is defined as 100% and when the relative content of the red phosphors is defined as 180%. Two-dashed chain lines and points indicated by "◆" represent the chromaticity region when the relative content of the red phosphors is defined as 100%. Solid lines and points indicated by "▪" represent the chromaticity region when the relative content of the red phosphors is defined as 180%.

The results of comparative experiment 2 will be described. According to FIGS. 25 and 26, the relative brightness during the white display decreases but the relative brightness during the red display increases as the relative content of the red phosphors increases, which is tendency the same as comparative experiment 1. The reason for such tendency has been described in the first embodiment section regarding comparative experiment 1. Regarding the results of comparative experiment 2, it is notable that the relative brightness during the red display is higher than the results of comparative experiment 1 when the relative content of the red phosphors is higher than 125% (a first point) and the relative brightness during the white display fell below the results of comparative experiment 1 when the relative content of the red phosphors is higher than 220% (a second point). The first point will be described in detail. When the relative content of the red phosphors is lower than 125%, the results of comparative experiment 2 regarding the relative brightness during the red display are similar to the results of comparative experiment 1. When the relative content of the red phosphors is higher than 125%, the results of comparative experiment 2 regarding the relative brightness during the red display are higher than the results of comparative experiment 1. A difference in relative brightness of the red display increases as the relative content of the red phosphors increases. This may be because the area ratio of each pixel portions PXR, PXG, PXB, or PXY in comparative experiment 2 to be used in the liquid crystal panel 111 including the pixel portions PXR, PXG, PXB, and PXY in the four colors is lower in comparison to the liquid crystal panel 11 including the pixel portions PXR, PXG, and PXB in the three colors in comparative experiment 1 and thus the increase rate in brightness regarding the red light rays during the red display is higher because the amount of the red emitting light rays included in the illumination light from the backlight unit is larger. Similar to comparative experiment 1, the relative brightness during the red display is higher than 105% when the relative content of the red phosphors is higher than 107% in comparative experiment 2.

The second point will be described in detail. The relative brightness during the white display fell below the results of comparative experiment 1 when the relative content of the red phosphors is higher than 220% but the relative brightness during the white display was similar to the results of comparative experiment 1 when the relative content of the red phosphors is lower than 220%. The reason why the relative brightness during the white display decreases when the relative content of the red phosphors is higher than 220% may be because the gray level of the yellow pixel portions is adjusted below the gray levels of the green pixel portions PXG and the blue pixel portions PXB by the control circuit board for the white display because the yellow pixel portions PXY pass not only the green light rays but also the red light rays and thus the difference between the gray level of the yellow pixel portions PXY during the white display and the gray level of the green pixel portions PXG or the gray level of the blue pixel portions PXB increases as the relative content of the red phosphors increases. According to the results of comparative experiment 2, a larger improvement can be achieved in the brightness during the red display in comparison to comparative experiment 1 and a significant decrease in brightness efficiency during the white display is less likely to occur by setting the relative content of the red phosphors in a range from 125% to 220%. The relative content of the red phosphors tends to be proportional to the relative amount of the red emitting light rays emitted by the red phosphors. Therefore, it is preferable to set the relative amount of the red emitting light rays in a range from 125% to 220%.

According to FIGS. 25 and 27, the x value and the y value of the red chromaticity during the red display increases and decreases, respectively, as the relative content of the red phosphors increases, which is a tendency similar to that in comparative experiment 1. The reason to have such a tendency and an effect achieved from the tendency (an effect to improve the color reproducibility achieved from the expansion of the red color region during the red display) are as described in the first embodiment section regarding comparative experiment 1. As the relative content of the red phosphors increases, the red color region during the red display further expands and the color reproducibility further improves. According to FIG. 25, the relative brightness of the red display is 146% when the content of the red phosphors is defined as 180%, that is, a larger improvement can be achieved in the brightness in comparison to the result of comparative experiment 1 (141%).

As described above, in this embodiment, the liquid crystal panel 111 includes the pixel portions PXR, PXG, PXB, and PXY in the four colors. According to the configuration, the area ratio of each pixel portion PXR, PXG, PXB, or PXY is smaller in comparison to the configuration including the pixel portions PXR, PXG, and PXB in the three colors. Therefore, the increase rate in the brightness regarding the red color during the red display is higher because the amount of the red emitting light rays included in the illumination light from the backlight unit is larger.

The backlight unit is configured such that the amount of the red emitting light rays is in the range from 125% to 220% when the amount of the emitting light rays in each color required to obtain the reference white light for the illumination light is defined as 100%. If the amount of the red emitting light rays is lower than 125%, the improvement in the brightness achieved during the red display may be similar to the improvement achieved by the configuration including the pixel portions PXR, PXG, and PXB in the three different colors. If the amount of the red emitting light rays is larger than 220%, the brightness efficiency during the white display may significantly decrease. By setting the amount of the red emitting light rays in the range from 125% to 220%, the higher effect of improving the brightness during the red display in comparison to the configuration including the pixel portion PXR, PXG, and PXB in the three different colors can be achieved and the significant decrease in brightness efficiency during the white display is less likely to occur.

The liquid crystal panel 111 is configured such that the pixel portions PXR, PXG, PXB, and PXY include at least the red pixel portions PXR configured to exhibit the red color, the green pixel portions PXG configured to exhibit the green color, the blue pixel portions PXB configured to exhibit the blue color, and the yellow pixel portions PXY configured to exhibit the yellow color. The backlight unit is configured to emit the light including at least the red light rays, the green light rays, and the blue light rays. The red light rays are the light rays in the first color. The control circuit board is configured to perform control with the red pixel portions PXR as the first pixel portions. In the liquid crystal panel 111 having such a configuration, the yellow pixel portions PXY among the pixel portions PXR, PXG, PXB, and PXY pass the green light rays and the red light rays. The illumination light from the backlight unit is more reddish, that is, with a tint of red, which is the first color, in comparison to the reference white color. In comparison to the configuration using the reference white color, the chromaticity regarding the yellow color during the yellow display is shifted toward the red side. Therefore, this configuration is preferable for expanding the color reproduction range.

### <Third Embodiment>

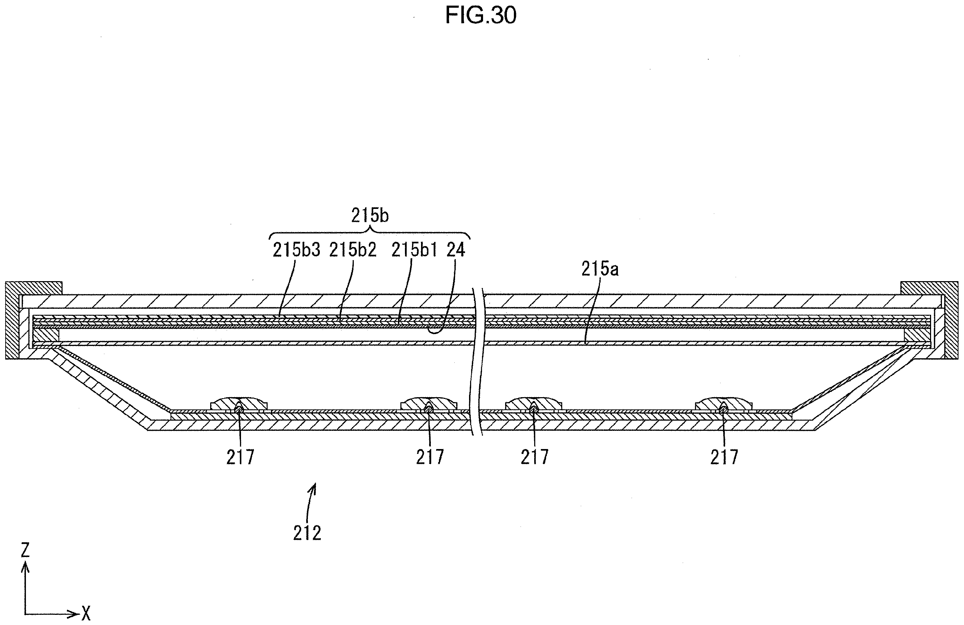

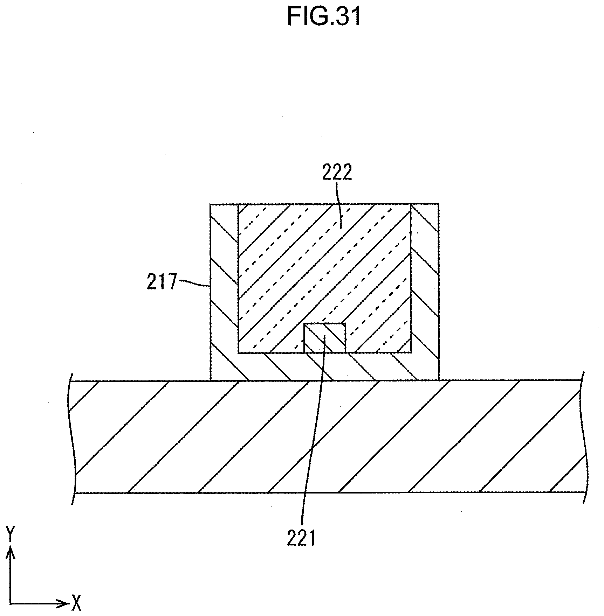

A third embodiment of the present invention will be described with reference to FIG. 30 or 31. The third embodiment includes LEDs 217 having a configuration different from the first embodiment and optical sheets 215b that further includes a wavelength conversion sheet 24. Configurations, functions, and effects similar to those of the first embodiment will not be described.

As illustrated in FIG. 30, the optical sheets 215b in this embodiment include the wavelength conversion sheet 24 (a wavelength conversion member) in addition to a micro lens sheet 215b1, a prism sheet 215b2, and a reflective type polarizing sheet 215b3. The wavelength conversion sheet 24 is disposed over the back surface of the micro lens sheet 215b (on a side closer to LEDs 217) between the micro lens sheet 215b1 and the diffuser plate 215a. The wavelength conversion sheet 24 is disposed more to the front than the LEDs 217, that is, on an exit side of a light emitting path to perform wavelength conversion on light rays from the LEDs 217. The wavelength conversion sheet 24 includes phosphors that are substances for the wavelength conversion on the light from the LEDs 217. As illustrated in FIG. 31, sealants 222 in the LEDs 217 do not contain phosphors. The light rays emitted by the LEDs 217 are light rays emitted by blue LED components 221, that is, light rays in a single color of blue. The wavelength conversion sheet 24 includes red phosphors and green phosphors. The red phosphors covert some of the blue light rays emitted by the LEDs 217 into red light rays. The green phosphors covert some of the blue light rays emitted by the LEDs 217 into green light rays. Illumination light from the backlight unit 212 in this embodiment exhibit white color produced through additive color mixture of the blue light rays that are primary light rays emitted by the LEDs 217 and the red light rays and the green light rays that are secondary light rays with wavelengths converted by the red phosphors and the green phosphors (wavelength conversion substances) contained in the wavelength conversion sheet 24. The illumination light has a predefined color temperature or a predefined relative color temperature.

The wavelength conversion sheet 24 includes at least a wavelength conversion layer (a phosphor film) and a pair of protective layers (protective films). The wavelength conversion layer contains the red phosphors and the green phosphors. The protective layers sandwich the wavelength conversion layer from the front and the back to protect the wavelength conversion layer. The red phosphors that emit red light rays when excited by the light rays in a single color of blue emitted by the LEDs 217 and the green phosphors that emit green light rays when excited by the light rays emitted by the LEDs 217 are dispersed in the wavelength conversion layer. The wavelength conversion sheet 24 converts the light rays emitted by the LEDs 217 (the blue light rays, the primary light rays) into the secondary light rays (the green light rays and the red light rays) which exhibit a color (yellow) which makes a complementary color pair with a color of the light rays emitted by the LEDs 217 (blue). The wavelength conversion layer is formed by applying a phosphor layer in which the red phosphors and green phosphors are dispersed to a base made of substantially transparent synthetic resin and having a film shape (a phosphor carrier). The protective layers are made of substantially transparent synthetic resin and having a film shape. The protective layers have high moisture proof properties.

The phosphors in each color are down conversion type (down shifting type) phosphors, that is, a excitation wavelength is shorter than a fluorescence wavelength. The down conversion type phosphors convert excitation light rays having shorter wavelengths and high energy levels into fluorescence light rays having longer wavelengths and lower energy levels. In comparison to a configuration in which up conversion type phosphors, the excitation wavelengths of which are longer than the fluorescent wavelengths (e.g., about 28 % of quantum efficiency), the quantum efficiency (light conversion efficiency) is higher, which is about 30 % to 50 %. The phosphors are quantum dot phosphors. The quantum dot phosphors include semiconductor nanocrystals (e.g., diameters in a range from 2 nm to 10 nm) which tightly confine electrons, electron holes, or excitons with respect to all direction of a three dimensional space to have discrete energy levels. A peak wavelength of emitting light rays (a color of emitting light rays) is freely selectable by changing the dot size. The peak of the emitting light rays from the quantum dot phosphors in the emission spectrum is sharp and a full width at half maximum of the emitting light rays is small. Therefore, the color purity is significantly high and a color gamut is wide. Materials used for the quantum dot phosphors include a material prepared by combining elements that could be divalent cations such as Zn, Cd, Hg, and Pb and elements that could be divalent anions such as O, S, Se, and Te (e.g., cadmium selenide (CdCe), zinc sulfide (ZnS), a material prepared by combining elements that could be trivalent cations such as Ga and In and elements that could be trivalent anions such as P, As, and Sb (e.g., indium phosphide (InP), gallium arsenide (GaAs), and chalcopyrite type compounds (CuInSe₂). In this embodiment, CdSe and ZnS are used in combination for the material of the quantum dot phosphors. The quantum dot phosphors in this embodiment are core-shell type quantum dot phosphors. Each core-shell type quantum dot phosphor includes a quantum dot and a shell that is made of a semiconductor material having a relatively large bandgap and covering the quantum dot. An example of the core-shell type quantum dot phosphor is Lumidot (trademark) CdSe/ZnSj manufactured by Sigma-Aldrich Japan LLC.

As described above, the backlight unit 212 in this embodiment includes at least the LEDs 217 and the wavelength conversion sheet 24 (The wavelength conversion member). The LEDs 217 includes the blue LED components 221. The wavelength conversion sheet 24 contains the phosphors. The wavelength conversion sheet 24 is disposed on the exit side of the light emitting path to perform the wavelength conversion on the light from the LEDs 217. Because the phosphors are contained in the wavelength conversion sheet 24 disposed on the exit side of the light emitting path relative to the LEDs 217, performance of the phosphors is less likely to be degraded due to heat produced by the blue LED components 221 in the LEDs 217. Furthermore, it is easier to find a means of sealing the phosphors with high sealing properties for mixing the phosphors into the wavelength conversion sheet 24. This configuration is preferable when phosphors that have an issue of degradation in performance due to moisture are used.

The phosphors are the quantum dot phosphors. According to the configuration, the wavelength conversion efficiency by the wavelength conversion sheet 24 further increases and the color purity of the wavelength converted light improves. With a means of sealing the quantum dot phosphors in the wavelength conversion sheet 24 with high sealing properties, the performance of the quantum dot phosphors is less likely to be degraded due to the moisture.

### <Fourth Embodiment>

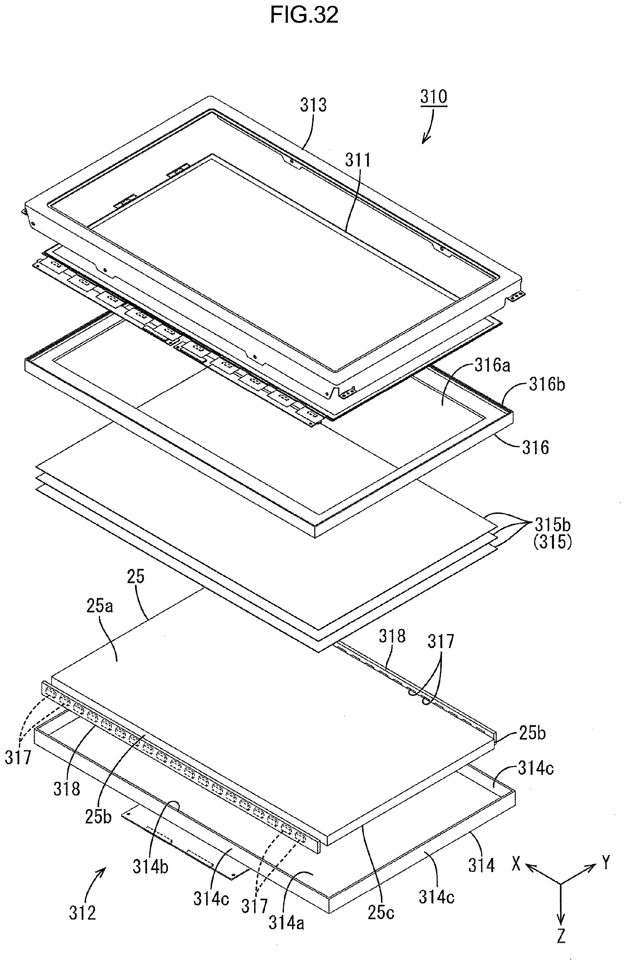

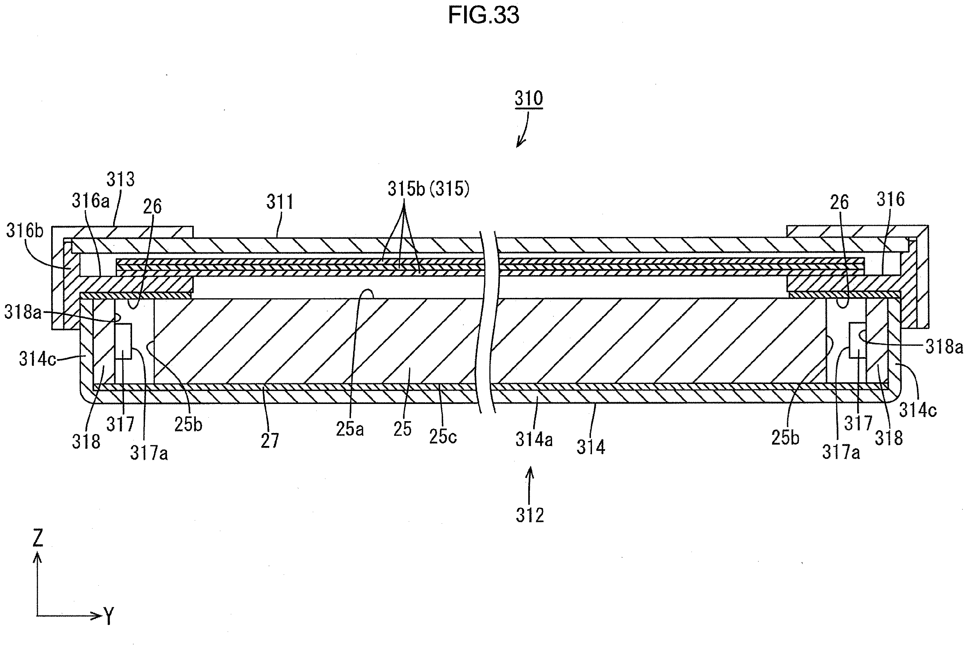

A fourth embodiment will be described with reference to FIGS. 32 and 33. The fourth embodiment includes a backlight unit 312 that is an edge light type backlight, which is different from the first embodiment. Configurations, functions, and effects similar to those of the first embodiment will not be described.

As illustrated in FIG. 32, a liquid crystal display device 310 according to this embodiment includes a liquid crystal panel 311, the edge light type backlight unit 312, and a bezel 313 that binds the liquid crystal panel 311 and the backlight unit 312 together. The configuration of the liquid crystal panel 311 is similar to that of the first embodiment and thus will not be described. The configuration of the edge light type backlight unit 312 will be described.

As illustrated in FIG. 32, the backlight unit 312 includes a chassis 314 and an optical member 315. The chassis 314 has a box-like shape and includes a light exiting portion 314b that opens toward the front side (a liquid crystal panel 311 side). The optical member 315 is disposed to cover the light exiting portion 314b of the chassis 314. Inside the chassis 314, LEDs 317, LED boards 318, a light guide plate 25, and a frame 316 are disposed. The LEDs 317 are light sources. The LEDs 317 are mounted on the LED boards 318. The light guide plate 25 guides light rays from the LEDs 317 to the optical member 315 (the liquid crystal panel 311). The frame 316 presses down the light guide plate 25 from the front side. The backlight unit 312 is a so-called edge light type (side light type) backlight including the LED boards 318 with the LEDs 317 at long edges thereof and the light guide plate 25 at the center between the LED boards 318. The backlight unit 312 in this embodiment is the edge light type backlight, which is preferable for reducing a thickness in comparison to the backlight unit 12 that is the direct backlight in the first embodiment. The edge light type backlight unit 312 in this embodiment does not include the reflection sheet 20 used in the direct backlight unit 12 in the first embodiment. Next, components of the backlight unit 312 will be described in detail.

The chassis 314 is made of metal. As illustrated in FIGS. 32 and 33, the chassis 314 includes a bottom plate 314a and side plates 314c. The bottom plate 314a has a horizontally rectangular shape similar to the liquid crystal panel 311. The side plates 314c project from outer edges of the bottom plate 314a, respectively. The chassis 314 has a shallow box-like overall shape with an opening on the front side. The long direction and the short direction of the chassis 314 (the bottom plate 314a) correspond to the X-axis direction (the horizontal direction) and the Y-axis direction (the vertical direction), respectively. The frame 316 and a bezel 313 can be fixed to the side plates 314c.

As illustrated in FIGS. 32 and 33, the optical member 315 includes three optical sheets 315b, that is, has a configuration similar to the first embodiment except for the diffuser plate 15a, which is not included in the optical member 315. As illustrated in FIG. 32, the frame 316 includes a frame portion 316a (a picture frame-like portion) which extends along the outer edges of the light guide plate 25. The frame portion 316a presses down the outer edges of the light guide plate 25 from the front side for about the entire edges. As illustrated in FIG. 33, first reflection sheets 26 are fixed to back surfaces of long sides of the frame portion 316a of the frame 316, that is, opposed surfaces to the light guide plate 25 and the LED boards 318, respectively. The first reflection sheets 26 have a size to extend for an about entire length of the long sides of the frame portion 316a. The first reflection sheets 26 are in direct contact with edges of the light guide plate 25 on the LEDs 317 sides to collectively cover the edges of the light guide plate 25 and the LED boards 318 from the front side. The frame 316 supports the outer edges of the optical member 315 from the rear side with the frame portion 316a that presses down the light guide plate 25 from the front side. According to the configuration, the optical member 315 is supported at a position separated from a light exiting surface 25a of the light guide plate 25, which will be described later, with a predefined gap (an air layer). The frame 316 includes liquid crystal panel supporting portion 316b that project from the frame portion 316a toward the front side and supports outer edges of the liquid crystal panel 311 from the rear side.

The configuration of the LEDs 317 is similar to the first embodiment and thus will not be described. As illustrated in FIG. 32, the LED boards 318 have an elongated plate shape that extends along the long direction of the chassis 314 (the X-axis direction, a long direction of light entering surfaces 25b of the light guide plate 25). The LED boards 318 are held with plate surfaces parallel to the X-axis direction and the Z-axis direction, that is, perpendicular to plate surfaces of the liquid crystal panel 311 and the light guide plate 25 (the optical member 315) in the chassis 314. The LED boards 318 are disposed to sandwich the light guide plate from ends of the short direction (the Y-axis direction). The LEDs 317 are mounted on plate surfaces of the LED boards 318 facing inward, that is, facing the light guide plate 25 (the opposed surfaces to the light guide plate 25). The LEDs 317 are arranged in line (linearly) on a mounting surface 318a of each LED board 318 along the longitudinal direction (the X-axis direction). The LEDs 317 are arranged along the long direction at the respective long side of the backlight unit 312. The LEDs 317 mounted on each LED board 318 are connected in series via a board wiring portion (not illustrated). The LED boards 318 are held in the chassis 314 with the mounting surfaces 318a on which the LEDs 317 are mounted opposed to each other. Therefore, the light emitting surfaces of the LEDs 317 mounted on one of the LED boards 318 are opposed to the light emitting surfaces 317a of the LEDs 317 mounted on the other LED board 318. Optical axes of the LEDs 317 substantially correspond with the Y-axis direction.

The light guide plate 25 is made of substantially transparent synthetic resin material (having high light transmissivity) with a refractive index sufficiently higher than that of the air (e.g., an acrylic resin material such as PMMA). As illustrated in FIG. 32, the light guide plate 25 has a horizontally-long rectangular shape in a plan view similar to the liquid crystal panel 311 and the chassis 314. The long direction and the short direction of the light guide plate 25 correspond with the X-axis direction and the Y-axis direction, respectively. The light guide plate 25 is disposed behind the liquid crystal panel 311 and the optical member 315 inside the chassis 314. The light guide plate 25 is sandwiched between the LED boards 318 with respect to the Y-axis direction. The LED boards 318 are disposed at the long sides of the chassis 314, respectively. The arrangement direction in which the LEDs 317 (the LED boards 318) and the light guide plate 25 are arranged corresponds with the Y-axis direction. The arrangement direction in which the optical member 315 (the liquid crystal panel 311) and the light guide plate 25 are arranged corresponds with the Z-axis direction. Therefore, the arrangement directions are perpendicular to each other. The light guide plate 25 receives light rays emitted by the LEDs 317 in the Y-axis direction, passes the light rays therethrough, and direct toward the optical member 315 (the Z-axis direction) to exit from the light guide plate 25.

As illustrated in FIG. 33, the plate surface facing the front side among the plate surfaces of the light guide plate 25 is the light exiting surface 25a (a light exiting plate surface) through which the light rays exit from the light guide plate 25 toward the optical member 315 and the liquid crystal panel 311. End surfaces on the long sides of the light guide plate 25 having an elongated shape along the X-axis direction among the outer end surfaces adjacent to the plate surface of the light guide plate 25 are opposed to the LEDs 317 (the LED boards 318) with a predetermined distance away. These surfaces are light entering surfaces 25b (light entering end surfaces) through which the light rays emitted by the LEDs 317 enter. The light entering surfaces 25b are surfaces parallel to the X-axis direction and the Z-axis direction and substantially perpendicular to the light exiting surface 25a. A second reflection sheet 27 is disposed on an opposite plate surface 25c from the light exiting surface 25a of the light guide plate 25 to cover an entire area of the opposite plate surface 25c. The second reflection sheet 27 is configured to reflect the light rays in the light guide plate toward the front side. The second reflection sheet 27 extends to areas that overlap the LED boards 318 (the LEDs 317) in the plan view. The second reflection sheet 27 is disposed such that the LED boards 318 (the LEDs 317) are sandwiched between the second reflection sheet 27 and the first reflection sheets 26 on the front side. According to the configuration, the light rays from the LEDs 317 are repeatedly reflected between the reflection sheets 26 and 27. Therefore, the light rays from the LEDs 317 are efficiently directed to the light entering surfaces 25b. A reflecting portion (not illustrated) for reflecting the internal light rays or a scattering portion (not illustrated) for scattering the internal light rays is formed on at least one of the light exiting surface 25a and the opposite plate surface 25c of the light guide plate 25 through patterning to have a predefined in-plane distribution. Namely, the light rays exiting through the light exiting surface 25a are controlled to have a homogeneous in-plane distribution.

### <Fifth Embodiment>

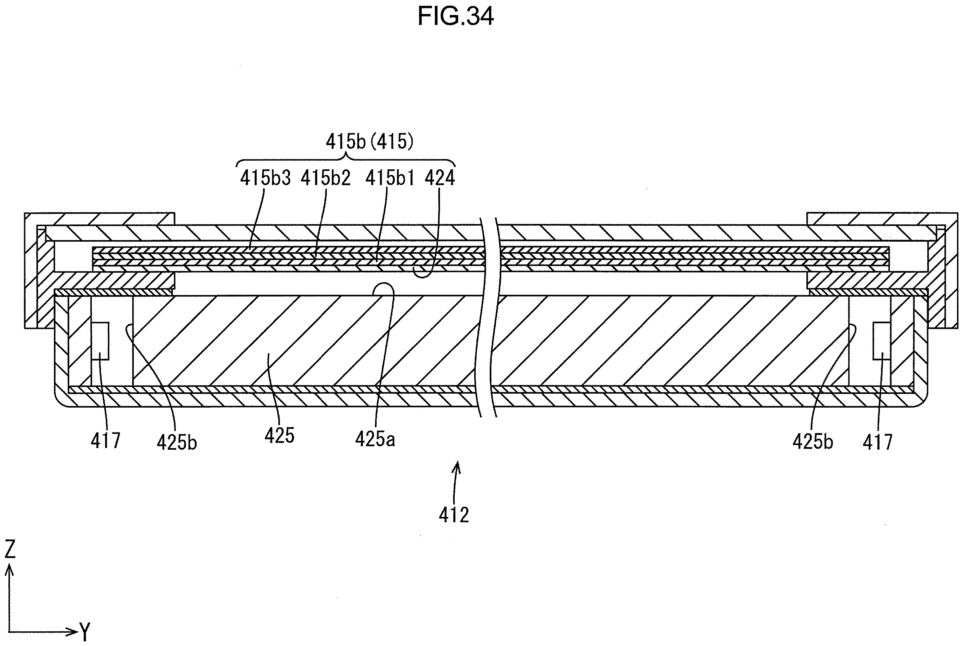

A fifth embodiment will be described with reference to FIG. 34. The fifth embodiment includes LEDs 417 having a configuration different from that of the fourth embodiment and optical sheets 415b further including a wavelength conversion sheet 424. Configurations, functions, and effects similar to those of the fourth embodiment will not be described.

As illustrated in FIG. 34, the optical sheets 415b (an optical member 415) include a micro lens sheet 415b1, a prism sheet 415b2, a reflective type polarizing sheet 415b3, and the wavelength conversion sheet 424. The wavelength conversion sheet 424 has a configuration the same as that of the third embodiment and thus will not be described in detail. The wavelength conversion sheet 424 has the red phosphors and the green phosphors that are substances configured to convert a wavelength of light from the LEDs 417. The wavelength conversion sheet 424 is disposed behind the micro lens sheet 415b1 (a side closer to the LEDs 417) to be layered. The wavelength conversion sheet 424 is disposed between the micro lens sheet 415b1 and a light guide plate 425. The LEDs 417 have a configuration that does not include phosphors. The LEDs 417 are configured to emit light rays in a single color of blue. The configuration of the LEDs 417 is similar to that of the third embodiment and thus will not be described in detail (see FIG. 31). The light rays emitted by the LEDs 417 enter the light guide plate 425 through the light entering surface 415a, travel through the light guide plate 425, and exit the light guide plate 425 through a light exiting surface 425a. Some of the light rays are converted into red light rays and green light rays by the red phosphors and the green phosphors when they pass through the wavelength conversion sheet 424 disposed to cover the light exiting surface 425a. The illumination light from the backlight unit 412 in this embodiment is white in color produced through additive color mixture of blue light rays that are primary light lays emitted by the LEDs 417 and the red light rays and the green light rays that are secondary light rays with the wavelengths converted by the red phosphors and the green phosphors in the wavelength conversion sheet 424. The illumination light has a predefined color temperature or a predefined relative color temperature.

### <Sixth Embodiment>

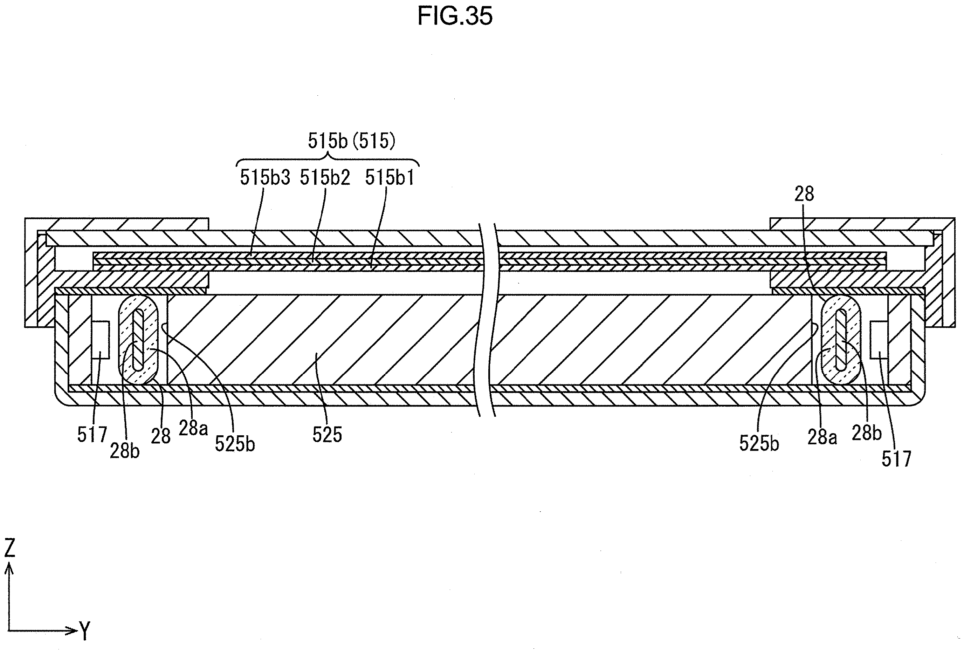

A sixth embodiment will be described with reference to FIG. 35. The sixth embodiment includes a wavelength conversion tube 28 instead of the wavelength conversion sheet 424 in the fifth embodiment. Configurations, functions, and effects similar to those of the fifth embodiment will not be described.

As illustrated in FIG. 35, the wavelength conversion tubes 28 (a wavelength conversion member) are disposed between LEDs 517 and a light entering surface 525b of a light guide plate 525, that is, on an exit side of a light emitting path relative to the LEDs 517. The wavelength conversion tubes 28 are configured to convert a wavelength of light rays from the LEDs 517. The wavelength conversion tubes 28 contain red phosphors and green phosphors that are substances configured to convert the wavelength of the light rays emitted by the LEDs 517. The wavelength conversion tubes 28 extend in the longitudinal direction of the light entering surface 525b of the light guide plate 525 (the X-axis direction). The wavelength conversion tubes 28 are opposed to the light entering surfaces 525b for about an entire length of the light entering surfaces 525b. The wavelength conversion tubes 28 are opposed to all the LEDs 517 mounted on the LED boards 518. According to the configuration, in comparison to the configuration of the fifth embodiment in which the wavelength conversion sheet 424 is disposed to cover the light exiting surface 425a of the light guide plate 425 (see FIG. 34), contents of the phosphors included in the wavelength conversion tubes 28 are lower. This configuration is preferable for reducing the cost. This embodiment includes the wavelength conversion tubes 28 that replace the wavelength conversion sheet 424 in the fourth embodiment (see FIG. 34). Therefore, optical sheets 515b (the optical member 515) include three sheets, that is, the micro lens sheet 515b1, the prism sheet 515b2, and the reflective polarizing sheet 515b3.

The wavelength conversion tubes 28 include substantially transparent tubular containers 28a (capillaries) and phosphor containing portions 28b. The phosphor containing portions 28b that contain the red phosphors and the green phosphors are sealed in the containers 28a. The containers 28a are made of glass. The containers 28a include hollows that are spaces in which the phosphor containing portions 28b are sealed. A cross section of each container 28a cut along a direction perpendicular to an extending direction of the container 28a has a vertically long rectangular shape. Each container 28a in a production process has an opening at an end of the long dimension. The phosphor containing portion 28b is inserted into the internal space through the opening. When the insertion of the phosphor containing portion 28b is completed, the opening of the container 28a is closed to seal the phosphor containing portion 28b in the internal space. The green phosphors are protected from moisture and thus degradation in performance is less likely to occur. In the phosphor containing portion 28b, the red phosphors and the green phosphors described in the first embodiment section are contained with a predefined blending ration and dispersed. The phosphor containing portion 28b has a dimension in the Z-axis direction larger than a dimension of the LEDs 517 in the same direction (the height). Therefore, some of the blue light rays emitted by the LEDs 517 are efficiently converted into the red light rays and the green light rays by the red phosphors and the green phosphors.

### <Seventh Embodiment>

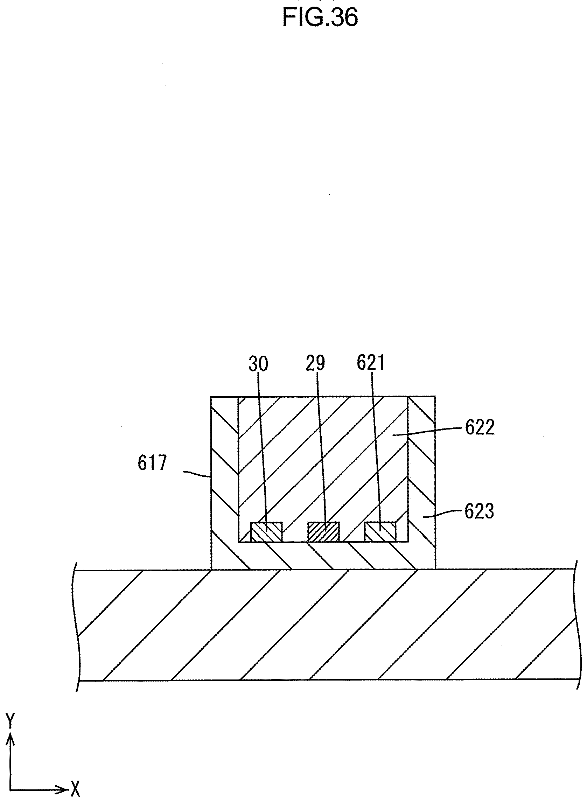

A seventh embodiment will be described with reference to FIG. 36. The seventh embodiment includes LEDs 617 having a configuration different from the first embodiment. Configurations, functions, and effects similar to those of the first embodiment will not be described.

As illustrated in FIG. 36, the LEDs 617 include LED components 621, 29, and 30 configured to exhibit light rays in red, green, and blue colors. Specifically, each LED 617 includes a blue LED component 621 configured to emit blue light rays, the green LED component 29 configured to emit green light rays (a green light emitting component, a light emitting component), the red LED component 30 configured to emit red light rays (a red light emitting component, a light emitting component), a sealant 622 that seals the LED components 621, 29, and 30, and a cases 623 that holds the LED components 621, 29, and 30 and the sealant 622. The LEDs 617 do not include phosphors unlike those in the first embodiment. The three LED components 621, 29, and 30 are arranged in predefined sequence within a bottom plate of each case 623. The blue LED components 621 are similar to those in the first embodiment. The green LED components 29 are semiconductors made of semiconductor material such as InGaN and GaP. The green LED components 29 emit light rays in a single color of green with a wavelength in the green wavelength range (about 500 nm to 570 nm) when forward biased. The red LED components 30 are semiconductors made of semiconductor material such as GaP and GaAsP. The red LED components 30 emit light rays in a single color of red with a wavelength in the red wavelength range (about 600 nm to 780 nm) when forward biased. The light rays emitted by the green LED components 29 and the red LED components 30 have color purities higher than those of the emitting light rays in the first embodiment in which the green phosphors and the red phosphors are contained in the sealant 22. The configuration of this embodiment is more preferable for improving the color reproducibility. The light emitted by the LEDs 617 include the blue light rays emitted by the blue LED components 621, the green light rays emitted by the green LED components 29, and the red light rays emitted by the red LED components 30. Therefore, the light emitted by the LEDs 617 exhibit white in color produced through additive color mixture of three different colors of the light rays. The light emitted by the LEDs 617 has a predefined color temperature or a predefined relative color temperature. The light emitted by the LEDs 617 is the illumination light from the backlight unit similar to the first embodiment.

The red LED components 30 are connected to a drive circuit that are different from at least drive circuits to which the blue LED components 621 and the green LED components 29 are connected. In comparison to the blue LED components 621 and the green LED components 29, the red LED components 30 are driven with larger currents (in constant current driving) or higher lighting period rate (in PWM driving). It is preferable to provide individual drive circuits for the LED components 621, 29, and 30 because the LED components 621, 29, and 30 have different component characteristics. However, the blue LED components 621 and the green LED components 29 may share a drive circuit.

The backlight unit in this embodiment in this embodiment is configured such that an amount of emitting light regarding the red LED components 30 that emit the red light rays is larger when an amount of emitting light rays regarding the LED components 621, 29, or 30 in each color required to obtain the reference white light for the illumination light applied to the liquid crystal panel. A control circuit board performs control such that a gray level of red pixel portions among pixel portions in three colors in the liquid crystal panel is lower than gray levels of green pixel portions and blue pixel portions during white display and the gray levels of the green pixel portions and the blue pixel portions during red display are lower than the gray levels thereof during the white display and the gray level of the red pixel portions during the red display is higher than the gray level thereof during the white display. According to the configuration, the illumination light from the backlight unit becomes more reddish in comparison to the reference white light. In the liquid crystal panel, the gray level of the red pixel portions is adjusted lower than the gray levels of the green pixel portions and the blue pixel portions by the control circuit board for the white display. Through the control, the white display is performed. In the liquid crystal panel, the gray levels of the green pixel portions and the blue pixel portions are adjusted lower than the gray levels thereof during the white display for the red display and the gray level of the red pixel portions higher than the gray level thereof during the white display for the red display. Therefore, during the red display, higher brightness can be achieved and the color reproduction range can be expanded.

In this embodiment, as described above, the backlight unit includes at least the LED components 621, 29, and 30 that emit the light rays in different colors. The backlight unit is configured such that the amount of the emitting light rays regarding the red LED components 30 (first light emitting components) configured to emit the red light rays is larger than the amount of the light rays regarding the LED components 621, 29, and 30 in each color required to obtain the reference white light for the illumination light. According to the configuration, the light rays in different colors emitted by the LED components 621, 29, and 30 form the illumination light from the backlight unit. The amount of the emitting light rays regarding the red LED components 30 among the LED components 621, 29, and 30 is larger than the reference amount of the emitting light regarding the LED components 621, 29, and 30 in each color required to obtain the reference white light for the illumination light. In comparison to a backlight unit including LEDs each including a single LED component and phosphors configured to convert a wavelength of light from the LED component, the color purities regarding the colors of the light rays emitted by the LED components 621, 29, and 30 are higher. This configuration is preferable for improving the color reproducibility.

### <Other Embodiments>

The present invention is not limited to the above embodiments described in the above sections and the drawings. For example, the following embodiments may be included in technical scopes of the present invention.
(1) The gray levels of the pixel portions for the white display may be altered as appropriate from those in each of the above embodiments.
(2) In each of the embodiments, the gray revels of the pixel portions other than the red pixel portions (the green pixel portions, the blue pixel portions, the yellow pixel portions) are set to 0, which is the minimum level, for the red display. However, the gray levels of the pixel portions may be set larger than 0. This is applicable for the blue display, the green display, and the yellow display.
(3) In each of the embodiments, for the red display, the gray level of the red pixel portions that are the pixel portions in color the same as the display color is set to 255, which is the maximum. However, the gray level of the red pixel portions may be set lower than 255. This is applicable for the blue display, the green display, and the yellow display.
(4) In each of the embodiments, the amount of the red emitting light rays is set larger than the reference amount of the emitting light rays in each color among the three colors required to obtain the reference white color for the illumination light from the backlight. Then, the control circuit board adjusts the gray level of the red pixel portions lower than the gray levels of the pixel portions in other colors for the white display and higher than the gray level thereof during the white display for the red display. However, the amount of the green emitting light rays or the blue emitting light rays included in the illumination light may be set larger than the reference amount of the emitting light rays and then the control circuit board may adjust the gray level of the green pixel portions or the blue pixel portions lower than the gray levels of the pixel portions in other colors for the white display and the gray level of the green pixel portions or the blue pixel portions higher than the gray level thereof during the white display for the green display or the blue display.
(5) Other than above (4), the amount of the red emitting light rays and the amount of the green emitting light rays included in the illumination light may be set larger and then the control circuit board may adjust the gray levels of the red pixel portions and the green pixel portions lower than the gray level of the blue pixel portions for the white display and gray levels of the red pixel portions and green pixel portions higher than the gray levels thereof during the white display for the red display and the green display.
(6) Other than above (5), the amount of the red emitting light rays and the amount of the blue emitting light rays included in the illumination light may be set larger and then the control circuit board may adjust the gray levels of the red pixel portions and the blue pixel portions lower than the gray level of the green pixel portions for the white display and the gray levels of the red pixel portions and the blue pixel portions higher than the gray levels thereof during the white display for the red display and the blue display.
(7) Other than above (6), the amount of the green emitting light rays and the amount of the blue emitting light rays included in the illumination light may be set larger than the reference amount of the emitting light rays and then the control circuit board may adjust gray levels of the green pixel portions and the blue pixel portions lower than the gray level of the red pixel portions for the white display and the gray levels of the green pixel portions and the blue pixel portions higher than the gray levels thereof during the white display for the green display and the blue display.
(8) In each of the embodiment sections, the liquid crystal panel including the pixel portions in three or four colors is described. However, a liquid crystal panel including pixel portions in five or more colors may be used. It is preferable to include cyan pixel portions that exhibit cyan color in addition to the red pixel portions, the green pixel portions, the blue pixel portions, and the yellow pixel portions. Pixel portions that exhibit colors other than cyan may be added.
(9) The second embodiment includes the liquid crystal panel includes the red pixel portions, the green pixel portions, the blue pixel portions, and the yellow pixel portions, that is, four colors of the pixel portions. However, a liquid crystal panel including cyan pixel portions that exhibit cyan color instead of the yellow color portions may be used. Pixel portions that exhibit colors other than cyan may be included instead of the yellow color portions. A liquid crystal panel including transparent pixel portions that pass all visible light rays may be included instead of the yellow color portions.
(10) The arrangement and the area ratios of the pixel electrodes in the different colors within the plane of the liquid crystal panel may be altered as appropriate from those in each of the above embodiments.
(11) The emission spectra (the peak wavelengths, the full widths at half maximums) of the blue LED components, the red phosphors, and the green phosphors in the LEDs may be altered as appropriate from those in the first, the second, and the fourth embodiments. This is applicable for the red phosphors and the green phosphors contained in the wavelength conversion sheet and the wavelength conversion tubes and the green LED components and the red LED components included in the LEDs in the third embodiment and the fifth to the seventy embodiments.
(12) In each of the embodiments, the LEDs, the wavelength conversion sheet, or the wavelength conversion tubes contain the green phosphors and the red phosphors. However, the LEDs, the wavelength conversion sheet, or the wavelength conversion tubes may contain only the yellow phosphors or the red phosphors and the green phosphors in addition to the yellow phosphors.
(13) In each of the embodiments, the LEDs include at least the blue LEDs. However, LEDs including violet LED components configured to emit violet light rays that are visible light rays or ultraviolet LED components (near-ultraviolet LED components) configured to emit ultraviolet rays (e.g., near-ultraviolet rays) may be used instead of the blue LED components. It is preferable to use the red phosphors, the green phosphors, and the blue phosphors as the phosphors contained in the wavelength conversion sheet and the wavelength conversion tubes. The yellow phosphors may be added, or the yellow phosphors may be used instead of the red phosphors and the green phosphors.
(14) The configuration of the second embodiment may be combined with the configurations of the third to the seventh embodiments.
(15) The configuration of the fourth embodiment may be combined with the configuration of the seventh embodiment.
(16) In the third, the fifth, and the sixth embodiments, the quantum dot phosphors used for the phosphors contained in the wavelength conversion sheet and the wavelength conversion tubes are the core-shell type phosphors including CdSe and ZnS. However, core type quantum dot phosphors each having a single internal composition may be used. For example, a material (CdSe, CdS, ZnS) prepared by combining Zn, Cd, Hg, or Pb that could be a divalent cation with O, S, Se, or Te that could be a dianion may be singly used. A material (indium phosphide (InP), gallium arsenide (GaAs)) prepared by combining Ga or In that could be a tervalent cation with P, As, or Sb that could be a tervalent anion or chalcopyrite type compounds (CuInSe₂) may be singly used. Other than the core-shell type quantum dot phosphors and the core type quantum dot phosphors, alloy type quantum dot phosphors may be used. Furthermore, quantum dot phosphors that do not contain cadmium may be used.
(17) In the third, the fifth, and the sixth embodiments, the quantum dot phosphors used for the phosphors contained in the wavelength conversion sheet and the wavelength conversion tubes are the core-shell type phosphors including CdSe and ZnS. Core-shell type quantum dot phosphors prepared by combining other materials may be used. The quantum dot phosphors used for the phosphors contained in the wavelength conversion sheet may be replaced by phosphors that do not contain cadmium (Cd).
(18) Other than each of the embodiments, sulfide phosphors may be used for the phosphors contained in the wavelength conversion sheet and the wavelength conversion tubes. Specifically, SrGa₂S₄:Eu²⁺ may be used for the green phosphors and (Ca, Sr, Ba) S:Eu²⁺ may be used for the red phosphors.
(19) Other than above (18), (Ca, Sr, Ba)₃SiO₄:Eu²⁺, or Ca₃Sc₂Si₃O₁₂:Ce³⁺ may be used for the green phosphors contained in the wavelength conversion sheet and the wavelength conversion tubes. (Ca, Sr, Ba)₂SiO₅N₈:Eu²⁺ or CaAlSiN₃: Eu²⁺ may be used for the red phosphors contained in the LEDs, the wavelength conversion sheet, and the wavelength conversion tubes. (Y, Gd)₃(Al, Ga)₅O₁₂:Ce³⁺ (so-called YAG:Ce³⁺), α-SiAlON: Eu²⁺, or (Ca, Sr, Br)₃SiO₄:Eu²⁺ may be used for the yellow phosphors contained in the LEDs, the wavelength conversion sheet, and the wavelength conversion tubes.
(20) Other than above (18) and (19), organic phosphors may be used for the phosphors contained in the LEDs, the wavelength conversion sheet, and the wavelength conversion tubes. The organic phosphors may be low molecular organic phosphors including triazole or oxadiazole as a basic skeleton.
(21) Other than the above (19), (19), and (20), phosphors configured to convert wavelengths through energy transfer via dressed photons (near-field light) may be used for the phosphors contained in the LEDs, the wavelength conversion sheet, and the wavelength conversion tubes. Preferable phosphors of this kind may be phosphors including zinc oxide quantum dots (ZnO-QD) with diameters from 3 nm to 5 nm (preferably about 4 nm) and DCM pigments dispersed in the zinc oxide quantum dots.
(22) In each of the above embodiments, InGaN is used for the material of the blue LED components included in the LEDs. However, GaN, AlGaN, GaF, ZnSe, ZnO, or AlGaInP may be used for the material of the LED components. In the seventh embodiment, the materials of the green LED components and the red LED components included in the LEDs may be altered as appropriate.
(23) In each of the above embodiments, the chassis is made of metal. However, the chassis may be made of synthetic resin.
(24) Each of the above embodiments includes three or four optical members. However, the number of the optical members may be to or less or five or greater. The kinds of the optical members may be altered as appropriate. For example, a diffuser sheet may be used. The sequence in which the optical members are layered can be altered as appropriate.
(25) Each of the first to the third embodiments includes the diffuser lenses that covers the LEDs, respectively. However, the present invention can be applied to a configuration without the diffuser lenses.
(26) Each of the first to the third embodiment has the configuration in which the frame is disposed between the diffuser plate and the optical sheet. However, the optical sheet may be disposed directly on the front surface of the diffuser plate. In this case, the frame may be omitted. In the third embodiment, the wavelength conversion sheet may be disposed directly on the front surface of the diffuser plate and another optical sheet may be disposed directly on the front surface of the wavelength conversion sheet.
(27) The number of the LED boards, the number of the LEDs in the chassis and the diffuser lenses mounted on each LED board may be altered as appropriated from those in the first to the third embodiments. For example, LED boards may be arranged in a matrix on the plate surface of the bottom plate of the chassis. LEDs may be arranged in a matrix on a mounting surface of an LED board.
(28) Each of the fourth to the sixth embodiments has the configuration in which the frame is disposed between the light guide plate and the optical sheet. However, the optical sheet may be disposed directly on the front surface of the light guide plate. In this case, the frame portion of the frame may press down the optical sheets from the front side and the frame portion may support the liquid crystal panel from the rear side. In the fifth embodiment, the wavelength conversion sheet may be disposed directly on the front surface of the light guide plate and another optical sheet is disposed directly on the front surface of the wavelength conversion sheet.
(29) In each of the fourth to the sixth embodiments, the LED boards are disposed such that the end surfaces of the light guide plate on the long sides are the light entering surfaces. However, the LED boards may be disposed such that the end surfaces of the light guide plate on the short sides are light entering surfaces.
(30) Each of the fourth to the sixth embodiments includes the edge light type backlight unit with a double-side light entering configuration. However, an edge light type backlight unit with a single-side light entering configuration including an LED board disposed such that an end surface of a light guide plate on one of the long sides or one of the short sides is a light entering surface may be used.
(31) Other than the fourth to the sixth embodiments, LED boards may be disposed such that three end surfaces of a light guide plate are light entering surfaces or all four end surfaces of a light guide plate are light entering surfaces.
(32) In each of the embodiments, the LEDs are used as light sources. However, organic ELs or other types of light sources may be used.
(33) In each of the embodiments, the liquid crystal panel and the chassis are in the upright position with the short directions corresponding with the vertical direction. However, the liquid crystal panel and the chassis may be in the upright portion with the long directions corresponding with the vertical direction.
(34) In each of the embodiments, the TFTs are used for the switching components of the liquid crystal display device. However, the present invention can be applied to a liquid crystal display device including switching components other than the TFTs (e.g., thin film diodes (TFD)). Furthermore, the present invention can be applied to a black-and-white liquid crystal display other than the color liquid crystal display.
(35) In each of the embodiment sections, the liquid crystal display device including the liquid crystal panel as a display panel is described. However, the present invention can be applied to display devises including other types of display panels such as micro electro mechanical systems (MEMS) display panels.
(36) In each of the embodiment sections, the transmissive type liquid crystal display device is described. However, the present invention can be applied to a reflective type liquid crystal display device or a semitransmissive type liquid crystal display device.
(37) In each of the embodiments, the television device including the tuner is provided. However, the present invention can be applied to a display device without a tuner. Specifically, the present invention can be applied to a liquid crystal display panel used in a digital signage or an electronic blackboard.

### Explanation of Symbols

10, 110, 310: Liquid crystal display device (Display device)
11, 111, 311: Liquid crystal panel (Display panel)
12, 212, 312, 412: Backlight unit (Lighting device)
17, 217, 317, 417, 517, 617: LED (Light source)
21, 221, 621: Blue LED component (Light emitting component)
22, 222, 622: Sealant
23, 623: Case
24, 424: Wavelength conversion sheet (Wavelength converting member)
28: Wavelength conversion tube (Wavelength converting member)
29: Green LED component (Light emitting component)
30: Red LED component (Light emitting component, First light emitting component)
CTR: Control circuit board (Pixel controller)
PXB: Blue pixel portion (Pixel portion, Pixel portion configured to exhibit another color)
PXG: Green pixel portion (Pixel portion, Pixel portion configured to exhibit another color)
PXR: Red pixel portion (Pixel portion, First pixel portion)
PXY: Yellow pixel portion (Pixel portion, Pixel portion configured to exhibit another color)

## Claims

1. A display device comprising:
a display panel including a plurality of pixel portions configured to exhibit different colors;
a lighting device for applying illumination light including light rays in a plurality of colors exhibiting different colors to the display panel, the lighting device being configured such that an amount of emitting light rays in first color included in the light rays in the plurality of colors is larger when an amount of emitting light rays in each color required to obtain reference white light for the illumination light; and
a pixel controller configured to perform control such that a gray level of first pixel portions configured to exhibit the first color among the plurality of pixel portions is lower than a gray level of the pixel portions configured to exhibit another color during white display and such that during first color display, the gray level of the pixel portions configured to exhibit the other color is lower than the gray level thereof during the white display and the gray level of the first pixel portions is higher than the gray level thereof during the white display.

2. The display device according to claim 1, wherein
the display panel is configured such that the plurality of pixel portions include at least red pixel portions configured to exhibit a red color, green pixel portions configured to exhibit a green color, and blue pixel portions configured to exhibit a blue color,
the light rays in the plurality of colors applied by the lighting device include at least red light rays, green light rays, and blue light rays,
the light rays in first color are the red light rays, and
the pixel controller is configured to perform the control with the red pixel portions as the first pixel portions.

3. The display device according to claim 1 or 2, wherein the lighting device is configured such that the amount of the emitting light rays in the first color is 107% or higher when the amount of the emitting light rays in each color required to obtain the reference white light for the illumination light is defined as 100%.

4. The display device according to any one of claims 1 to 3, wherein the display panel is configured such that the plurality of pixel portions exhibit four or more different colors.

5. The display device according to claim 4, wherein the lighting device is configured such that the amount of the emitting light rays in the first color is in a range from 125% to 220% when the amount of the emitting light rays in each color required to obtain the reference white light for the illumination light is defined as 100%.

6. The display device according to claim 4 or 5, wherein
the display panel is configured such that the plurality of pixel portions include at least red pixel portions configured to exhibit a red color, green pixel portions configured to exhibit a green color, blue pixel portions configured to exhibit a blue color, and yellow pixel portions configured to exhibit a yellow color,
the light rays in the plurality of colors applied by the lighting device include at least red light rays, green light rays, and blue light rays,
the light rays in first color are the red light rays, and the pixel controller is configured to perform the control with the red pixel portions as the first pixel portions.

7. The display device according to any one of claims 1 to 6, wherein
the lighting device include light emitting components configured to emit light rays and phosphors for converting wavelengths of light from the light emitting components,
the phosphors include at least first phosphors configured to emit light rays in the first color, and
the lighting device is configured such that a content of the first phosphors is higher when a content of the phosphors required to obtain the reference white light for the illumination light is defined as a reference content.

8. The display device according to claim 7, wherein the lighting device includes at least light sources including the light emitting components, cases holding the light emitting components, and sealants sealing the light emitting components in the cases, respectively, the sealants containing the phosphors.

9. The display device according to claim 8, wherein the light sources are configured such that the first phosphors are potassium silicofluoride using manganese for an activator.

10. The display device according to claim 7, wherein the lighting device includes at least light sources including the light emitting components and a wavelength conversion member containing the phosphors and being disposed on an exit side of a light emitting path relative to the light sources, the wavelength conversion member being configured to convert wavelengths of light rays from the light sources.

11. The display device according to claim 10, wherein the phosphors are quantum dot phosphors.

12. The display device according to any one of claims 1 to 6, wherein
the lighting device includes at least a plurality of light emitting components configured to emit light rays in a plurality of colors, and
the lighting device is configured such that an amount of emitting light rays emitted by the first light emitting components configured to emit light rays in the first color is larger when an amount of emitting light rays in each color emitted by the plurality of light emitting components required to obtain the reference white light for the illumination light is defined as a reference amount.

13. A television device comprising the display device according to any one of claims 1 to 12.
